# EUROPEAN PATENT APPLICATION

(11) **EP 4 553 948 A1**
(43) Date of publication of application: **14.05.2025**
(21) Application number: 23843422.9
(22) Date of filing: 21.07.2023
(51) Int. Cl.: H01M 10/42, H01M 10/04, G01R 31/364, G01R 1/067

(54) **BATTERY CELL GRIPPER AND BATTERY CELL TRANSFER APPARATUS COMPRISING SAME**

(30) Priority: 21.07.2022 KR 20220090311; 21.07.2022 KR 20220090320; 21.07.2022 KR 20220090327; 21.07.2022 KR 20220090338
(71) Applicant: Apro Co., Ltd, Gunpo-si, Gyeonggi-do 15809 (KR)
(72) Inventor: LIM, Jong Hyun, Gunpo-si Gyeonggi-do 15809 (KR); SEO, Young Chul, Gunpo-si Gyeonggi-do 15809 (KR); KANG, Jong Goo, Gunpo-si Gyeonggi-do 15809 (KR); KO, Won Seok, Seoul 07916 (KR); KWON, Hyunk Jin, Gunpo-si Gyeonggi-do 15809 (KR)
(74) Representative: Sander, Rolf
(86) International application number: PCT/KR2023/010542
(87) International publication number: WO 2024/019576

(57) **Abstract**

Disclosed are a battery cell gripper and a battery cell transfer device including the same. A battery cell gripper includes a link frame that supports a configuration within the battery cell gripper, grip parts that are formed at one end of a grip body at a preset area and move away from or closer to each other to grip the battery cell, a hinge axis that allows the grip body to rotate around itself, an actuator, a panel that moves up and down by the actuator to adjust a gap between the grip parts and includes at least two guide grooves, and a grip projection that protrudes at the other end of the grip body or is connected in a protruding form and moves along the guide groove.

## Description

### CROSS-REFERENCE TO RELATED APPLICATIONS

This application is a continuation of International Application No. PCT/KR2023/010542 filed on July 21, 2023, which claims priority to Korean Patent Application No. 10-2022-0090311, filed on 2022-07-21, Korean Patent Application No. 10-2022-0090320, Filed on 2022-07-21, Korean Patent Application No. 10-2022-0090327, filed on 2022-07-21, and Korean Patent Application No. 10-2022-0090338, filed on 2022-07-21, the entire contents of which are herein incorporated by reference.

### [Technical Field]

The present disclosure relates to a battery cell gripper that minimizes shaking due to a lateral moment.

### [Background Art]

The contents described in this Background Art merely provide background information on the present embodiment and do not constitute the related art.

In general, secondary batteries are capable of recharging and large capacity, and representative examples of the secondary batteries include nickel cadmium, nickel hydrogen, lithium ion batteries, etc. The secondary batteries may be manufactured in a flexible pouched type. In this case, the secondary batteries have the advantage of being relatively free in shape.

The secondary batteries include pouches and battery cells. The secondary batteries are configured in a form in which the cell pouch is provided, the battery cell is disposed inside, and a polymer outer material corresponding to the pouch surrounds the battery cells.

Meanwhile, inspections should be performed to determine whether the manufactured secondary battery has electrical characteristics as designed and whether there are any short-circuited parts in each cell. Accordingly, the manufactured secondary battery cells are transferred from the pouch to an inspection device, and are installed in the inspection device and inspected.

In order to inspect the manufactured secondary battery cells, the transfer device grips secondary battery cells in the pouch and transfers the gripped secondary battery cells to the inspection device. In this case, shaking occurs during a process of gripping the secondary battery cells by the transfer device, a process of gripping the secondary battery cells and then separating the secondary battery cells from the pouch, and a process of transferring the secondary battery cells to the inspection device. In particular, a lateral moment occurs during each process. The lateral moment reduces lifespan of each component in the transfer device and prevents the secondary battery cells gripped by the transfer device from being completely installed in the inspection device due to the displacement of the secondary battery cells.

Therefore, there is a demand for a method of reducing shaking caused by a lateral moment during a transfer of a secondary battery cell.

### [Disclosure]

### [Technical Problem]

The present disclosure provides a battery cell gripper that minimizes shaking caused by a lateral moment.

The present disclosure provides a battery cell transfer capable of precisely adjust a gap between battery cells and a battery cell transfer device including the same.

The present disclosure provides a pressurizing press, a jig plate, and a battery cell inspection device including the same, which can uniformly apply pressure to a battery cell to derive accurate inspection results.

The present disclosure provides a pressurizing press, a jig plate, and a battery cell inspection device including the same, which can adjust an arrangement height of an installed battery cell.

The present disclosure provides a probe pin, a battery cell fixing module, and a battery cell inspection device including the same, which can minimize wear of a probe pin in contact with an electrode of a battery cell to improve its lifespan.

The present disclosure provides a probe pin, a battery cell fixing module, and a battery cell inspection device including the same, which can minimize damage to a battery cell electrode to improve its lifespan.

### [Technical Solution]

According to an embodiment of the present disclosure, a battery cell gripper gripping a battery cell includes a link frame that supports a configuration within the battery cell gripper, grip parts that are formed at one end of a grip body at a preset area and move away from or closer to each other to grip the battery cell, a hinge axis that allows the grip body to rotate around itself, an actuator, a panel that moves up and down by the actuator to adjust a gap between the grip parts and includes at least two guide grooves, and a grip projection that protrudes at the other end of the grip body or is connected in a protruding form and moves along the guide groove.

According to an embodiment of the present disclosure, a battery cell gripper includes a first link frame that supports components within the battery cell gripper, a grip body that grips a battery cell, a third link frame for supporting the grip body, a second link frame that connects the first link frame and the third link frame, a slide rail that is formed within the first link frame, a guide part that is formed within the second link frame for raising and lowering the second link frame along the slide rail, a stopper support part that is formed at one end of the first link frame, and a stopper that is arranged between the stopper support part and the second link frame to prevent a collision between the second link frame and the stopper support part, in which the stopper includes a groove recessed toward its center on a surface facing the stopper support part, and the stopper support part includes a protrusion that protrudes toward the stopper in a shape corresponding to the groove on the surface facing the stopper and is coupled to the groove.

According to an embodiment of the present disclosure, a battery cell gripper includes a first link frame that supports components within the battery cell gripper, a grip body that grips a battery cell, a third link frame for supporting the grip body, a second link frame that connects the first link frame and the third link frame, a slide rail that is formed within the first link frame, a guide part that is formed within the second link frame for raising and lowering the second link frame along the slide rail, a stopper support part that is formed at one end of the first link frame, and a stopper that is arranged between the stopper support part and the second link frame to prevent a collision between the second link frame and the stopper support part, in which the stopper support part includes a groove recessed toward its center on a surface facing the stopper, and the stopper includes a protrusion that protrudes toward the stopper support part in a shape corresponding to the groove on the surface facing the stopper support part and is coupled to the groove.

According to an embodiment of the present disclosure, a battery cell transfer device includes a plurality of battery cell grippers that grips a battery cell, a pair of link members that is arranged to be crossed, a first link member connecting part that has a hinge structure and fixes the link member and the battery cell gripper to rotate the link member, and a second link member connecting part that has the hinge structure and is coupled to each of the pair of link members to rotate the link member.

According to an embodiment of the present disclosure, a jig press plate receiving power from an outside to apply pressure to a plate on which a battery cell is arranged includes a pressurizing part that is physically connected to an external component supplying power to pressurize another member and a wing part that extends from the pressurizing part in a preset direction and disperses the pressure transmitted to the pressurizing part.

According to an embodiment of the present disclosure, a jig plate includes a jig frame, a pad that is arranged within the jig frame to prevent damage to a battery cell when pressurizing the battery cell, a support sheet that is arranged between the jig frame and an adjacent jig frame to support the battery cell, a support sheet fixing part that is positioned on an upper surface of the jig frame to enable the support sheet to be arranged on its upper surface, a support sheet support part that is coupled to the support sheet fixing part and fixes the support sheet on the support sheet fixing part, and a support sheet height adjustment part that adjusts the support sheet fixing part in a height direction.

According to an embodiment of the present disclosure, an electrode connection module electrically connected to a battery cell or a battery cell electrode includes a connecting member that is electrically connected by contacting a frame and the battery cell electrode, a rotating member that is coupled to a position of the connecting member and rotates the connecting member when the connecting member receives an external force, an elastic member that has one end connected to the frame and the other end connected to the rotating member and restores the rotating member to an initial position, and a bearing that is positioned within the frame and rotates the rotating member in place.

An electrode connection module electrically connected to a battery cell or a battery cell electrode includes a frame, a connecting member that is electrically connected by contacting the battery cell electrode, and a battery cell detection sensor that senses whether the battery cell is moving closer to the connecting member.

According to an embodiment of the present disclosure, a battery cell fixing module that fixes a battery cell and moves together with movement of the battery cell, a first frame that electrically contacts the battery cell and fixes the battery cell, a second frame that is connected to the first frame and allows the first frame to move along an axis on which the battery cell moves, a third frame that is positioned so that the first frame and the second frame face each other at a preset distance, a lead that receives power and moves along the axis on which the battery cell moves and contacts or moves away from the second frame, and an actuator that provides power to the lead.

### [Advantageous Effects]

As described above, according to an aspect of the present embodiment, by minimizing the shaking caused by the lateral moment, it is possible to minimize the change in position of the battery cell and reduce the wear of each component.

According to an aspect of the present embodiment, by precisely adjusting the gap between the battery cells, it is possible to quickly grip and transfer the battery cells without difficulty regardless of the gap between the battery cells.

According to an aspect of the present embodiment, by uniformly applying the pressure to the battery cell, it is possible to inspect the electrical characteristics of the battery cell in the accurate environment.

According to an aspect of the present embodiment, it is possible to easily adjust the arrangement height of the installed battery cell.

According to an aspect of the present embodiment, by minimizing the wear of the probe pin in contact with the electrode of the battery cell, it is possible to improve the lifespan of the probe pin.

In addition, according to an aspect of the present embodiment, it is possible to minimize the damage to the battery cell electrode even when the battery cell moves under pressure.

### [BRIEF DESCRIPTION OF THE DRAWINGS]

FIG. 1 is a perspective view of a battery cell inspection system according to an embodiment of the present disclosure.
FIG. 2 is a plan view of the battery cell inspection system according to an embodiment of the present disclosure.
FIG. 3 is a perspective view of the battery cell transfer device according to an embodiment of the present disclosure.
FIGS. 4 and 5 are perspective views of the battery cell transfer according to an embodiment of the present disclosure.
FIG. 6 is an enlarged view of a link member and a link member connecting part according to an embodiment of the present disclosure.
FIG. 7 is a cross-sectional view of a first link member connecting part according to an embodiment of the present disclosure.
FIG. 8 is a cross-sectional view of a second link member connecting part according to an embodiment of the present disclosure.
FIG. 9 is a diagram illustrating a configuration of a battery cell gripper according to an embodiment of the present disclosure.
FIG. 10 is an enlarged cross-sectional view of a second stopper and a stopper support part according to an embodiment of the present disclosure.
FIG. 11 is a perspective view of a battery cell inspection device according to an embodiment of the present disclosure.
FIG. 12 is a perspective view of a jig press plate according to an embodiment of the present disclosure.
FIG. 13 is a diagram illustrating a portion where pressure is applied to a jig plate by the jig press plate according to an embodiment of the present disclosure.
FIG. 14 is a perspective view of the jig plate according to an embodiment of the present disclosure.
FIG. 15 is a diagram illustrating a configuration of a support sheet height adjustment part and a fixing part according to an embodiment of the present disclosure.
FIG. 16 is a diagram illustrating a configuration of a support sheet support part according to an embodiment of the present disclosure.
FIG. 17 is a diagram illustrating a configuration of a battery cell fixing module according to an embodiment of the present disclosure.
FIG. 18 is a diagram illustrating a configuration of an electrode connection unit in the battery cell fixing module according to an embodiment of the present disclosure.
FIG. 19 is a perspective view of a conveyor according to an embodiment of the present disclosure.
FIG. 20 is a diagram illustrating a configuration of a battery cell gripper according to another embodiment of the present disclosure.
FIG. 21 is an enlarged view of a portion of the battery cell gripper according to another embodiment of the present disclosure.
FIG. 22 is a diagram illustrating a configuration of the battery cell gripper according to another embodiment of the present disclosure.

### [Best Mode]

The present disclosure may be variously modified and have several exemplary embodiments. Therefore, specific exemplary embodiments of the present disclosure will be illustrated in the accompanying drawings and be described in detail. However, it is to be understood that the present disclosure is not limited to a specific embodiment, but includes all modifications, equivalents, and substitutions without departing from the scope and spirit of the present disclosure. Throughout the drawings, similar components will be denoted by similar reference numerals.

The terms such as 'first', 'second', 'A', and 'B' may be used to describe various components, but these components are not to be limited by these terms. The terms are used to distinguish one component from another component. For example, the first component may be named the second component and the second component may also be similarly named the first component, without departing from the scope of the present disclosure. A term 'and/or' includes a combination of multiple related described items or any one of the plurality of related described items.

It is to be understood that when one component is referred to as being "connected to" or "coupled to" another component, one component may be connected directly to or coupled directly to another component or be connected to or coupled to another component with the other component interposed therebetween. On the other hand, it should be understood that when one element is referred to as being "connected directly to" or "coupled directly to" another element, it may be connected to or coupled to another element without the other element interposed therebetween.

Terms used in the present specification are used only in order to describe specific exemplary embodiments rather than limiting the present disclosure. Singular forms include plural forms unless the context clearly indicates otherwise. It should be understood that terms such as "include" or "have" in this application do not preliminarily exclude the presence or addition of features, numbers, steps, operations, components, parts, or combinations thereof described in the specification.

Unless indicated otherwise, it is to be understood that all the terms used in the specification including technical and scientific terms have the same meaning as those that are generally understood by those who skilled in the art.

Terms generally used and defined by a dictionary should be interpreted as having the same meanings as meanings within a context of the related art and should not be interpreted as having ideal or excessively formal meanings unless being clearly defined otherwise in the present specification.

In addition, each configuration, process, process, method, etc., included in each embodiment of the present disclosure may be technically shared within a range that does not contradict each other.

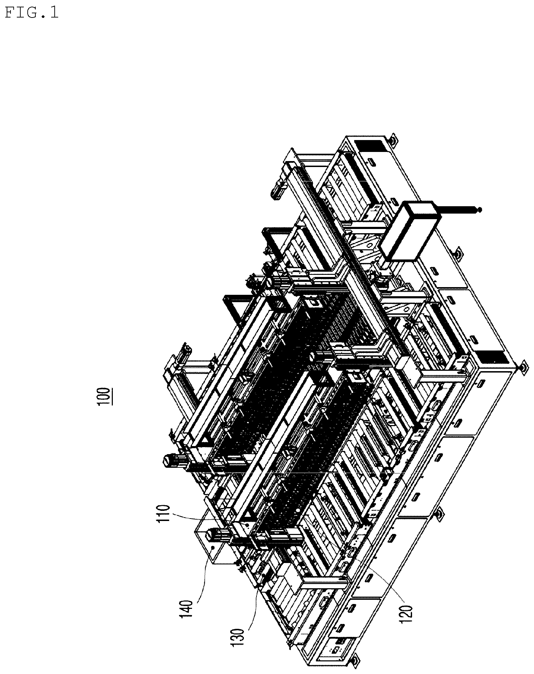

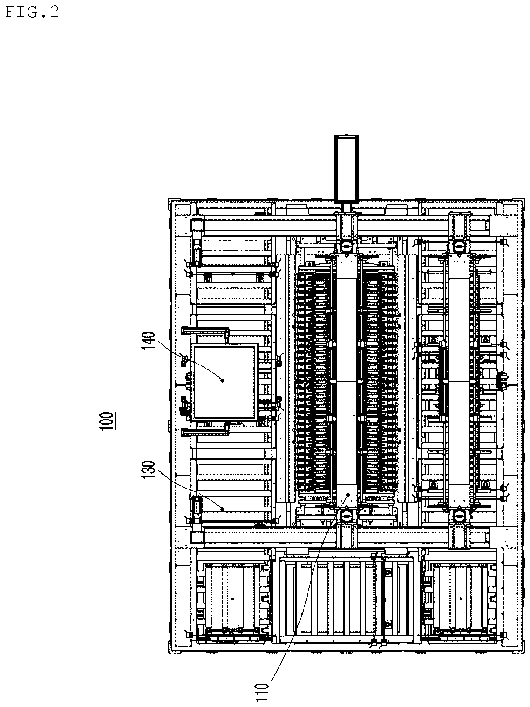

FIG. 1 is a perspective view of a battery cell inspection system according to an embodiment of the present disclosure, and FIG. 2 is a plan view of the battery cell inspection system according to an embodiment of the present disclosure.

Referring to FIGS. 1 and 2, a battery cell inspection system 100 according to an embodiment of the present disclosure includes a battery cell transfer device 110, a battery cell inspection device 120, a conveyor 130, and a control device (not illustrated).

The battery cell inspection system 100 inspects characteristics of battery cells, particularly, battery cells loaded into a pouch type battery. The battery cell inspection system 100 inspects whether the battery cells may generate designed electrical characteristics under a situation where the battery cells are subjected to a preset pressure.

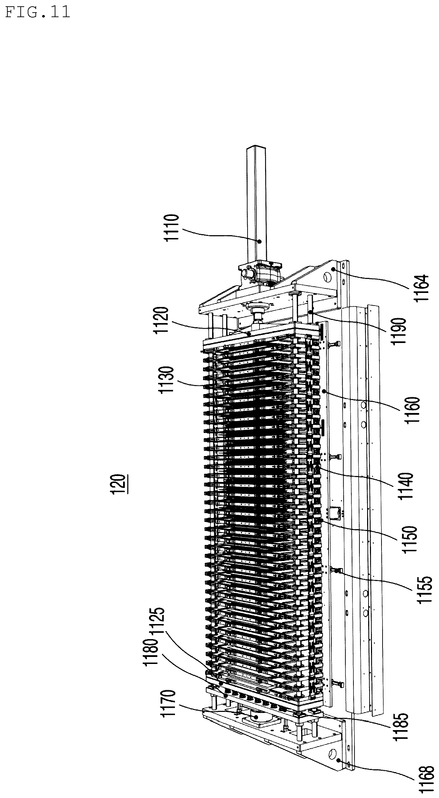

The battery cell transfer device 110 grips battery cells in a tray 140 that is introduced along a conveyor 130 and transfers the gripped battery cells to the battery cell inspection device 120, or transfers the battery cells inspected by the battery cell inspection device 120 to the tray 140 (moving along the conveyor 130). The battery cell transfer device 110 grips battery cells that are relatively densely arranged within the tray 140, disperses the battery cells (battery cells that the battery cell inspection device 120 may inspect) at an appropriate gap, and transfers the battery cells to the battery cell inspection device 120. Again, the battery cell transfer device 110 grips battery cells that are relatively dispersed and arranged within the battery cell inspection device 120, densely packs the battery cells again, and transfers the battery cells to the tray 140. A description of each component of the battery cell transfer device 110 will be described below with reference to FIGS. 2 to 10. The battery cell inspection device 120 inspects electrical characteristics of a plurality of battery cells that are installed in a preset environment. The battery cell inspection device 120 receives each battery cell transferred by the battery cell transfer device 110. The battery cell inspection device 120 electrically connects the installed battery cells, and then applies a preset amount of pressure to the battery cells. The battery cell inspection device 120 may apply relatively uniform pressure to each battery cell compared to the conventional one. The battery cell inspection device 120 supplies power to each battery cell while the pressure is applied to each battery cell. The battery cell inspection device 120 inspects the electrical characteristics of the battery cells that receive power in the above-described situation, such as the amount of current. A normal battery cell has a constant electrical characteristic or an output value while it is applied with a certain amount of pressure, while a battery cell that has an abnormality does not have the constant electrical characteristic or output value. The battery cell inspection device 120 performs the above-described inspection and determines whether or not each battery cell is abnormal. A description of each component of the battery cell inspection device 120 will be described below with reference to FIGS. 11 to 18.

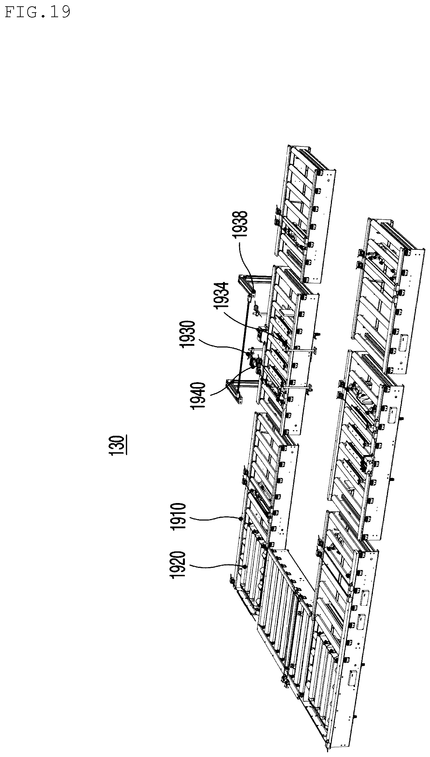

The conveyor 130 transfers the introduced tray 140 along a preset path. The conveyor 130 introduces the tray 140 into one side of the battery cell inspection device 120, and transfers the tray 140 to the opposite side of the battery cell inspection device 120 by bypassing the periphery of the battery cell inspection device 120. The conveyor 130 introduces the tray 140 having the battery cells arranged thereon for inspection into one side of the battery cell inspection device 120 and then stops the tray 140. Accordingly, the conveyor 130 enables the battery cells to be gripped within the tray 140 where the battery cell transfer device 110 is stopped at the corresponding position and the tray 140 to be transferred to the battery cell inspection device 120. Meanwhile, after the above-described operation is performed, the conveyor 130 bypasses the battery cell inspection device 120 and transfers the tray 140 to an opposite side of the battery cell inspection device 120 and then stops the tray 140. At the same time, the conveyor 130 introduces the tray 140 having other battery cells 140 arranged thereon for inspection into one side of the battery cell inspection device 120 and then stops the tray 140. Accordingly, the battery cell transfer device 110 may transfer the battery cells (which is transferred to the opposite side of the battery cell inspection device 120) that have been inspected in the battery cell inspection device 120 to the tray 140, and at the same time, may grip battery cells within another tray 140 that has been introduced for inspection and transfer the gripped battery cells to the battery cell inspection device 120.The specific structure of the conveyor 130 is illustrated in FIG. 19.

FIG. 19 is a perspective view of a conveyor according to an embodiment of the present disclosure.

Referring to FIG. 19, the conveyor 130 according to an embodiment of the present disclosure includes a frame 1910, a cylinder 1920, a distance detection sensor 1930, a tray detection and acceleration sensor 1934, a temperature sensor 1938, a tray recognition unit 1940, and a motor (not illustrated) .

The frame 1910 is implemented in a form that surrounds the battery cell inspection device 120 around the battery cell inspection device 120. Accordingly, the frame 1910 is positioned on one side and the opposite side of the battery cell inspection device 120, and is formed to bypass the battery cell inspection device 120. For example, the frame 1910 may be implemented in a ' 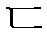 ' shape, so that the battery cell inspection device 120 is positioned in an empty space formed by the frame 1910.

The cylinder 1920 is positioned in the center of the frame 1910 and receives power from a motor (not illustrated) to transfer the tray 140.

The distance detection sensor 1930 senses whether the tray 140 is positioned at the fixed position and stopped. The distance detection sensor 1930 senses whether the tray 140 is positioned at the fixed position where the battery cell transfer device 110 may grip and transfer the battery cell.

The tray detection and acceleration sensor 1934 senses whether there is the tray 140 introduced into the conveyor 130 and its introduction speed. The tray detection and acceleration sensor 1934 senses whether there is the tray 140 being transferred by the cylinder 1920 and at what speed it is introduced into. Accordingly, the tray detection and acceleration sensor 1934 enables the introduced tray 140 to be stopped at the above-described fixed position.

The temperature sensor 1938 senses the temperature of the battery cell that is gripped and moves up by the battery cell transfer device 110. The temperature sensor 1938 is positioned behind or in front of the tray 140, which is positioned at the fixed position or adjacent thereto, or is positioned at a wider gap than the tray 140. Accordingly, the temperature sensor 1938 senses the temperature of the battery cell without affecting the transfer of the battery cell.

The tray recognition unit 1940 recognizes the tray 140 that is introduced into the conveyor 130. Each tray 140 is assigned an identification number so that an external device may determine whether there is a problem with the battery cell included in a certain tray 140. The tray recognition unit 1940 recognizes the identification number of the tray 140 that is positioned at the fixed position or the tray 140 that is passing the fixed position.

The motor (not illustrated) supplies power to the cylinder 1920 to rotate and transfer the tray 140.

Referring back to FIGS. 1 and 2, a control unit (not illustrated) controls an operation of each component.

The control unit (not illustrated) controls the operation of the conveyor 130. The control unit (not illustrated) receives sensing values from each sensor in the conveyor 130 and controls the tray 140 to be disposed in the above-described fixed position in the conveyor 130. The control unit (not illustrated) controls the conveyor 130 to transfer the tray 140 from the above-described fixed position to the opposite side (a position for the battery cell transfer device to transfer the battery cell for which the inspection is completed to the tray). Since the transfer distance of the conveyor 130 is fixed, the control unit (not illustrated) may easily transfer the tray 140 from the above-described fixed position to the opposite side. In this case, when transferring the tray 140 that does not include the battery cell, the control unit (not illustrated) controls the conveyor 130 so that another tray including a battery cell for inspection is positioned at the above-described fixed position at the time when the corresponding tray is positioned on the opposite side. By controlling in this way, the inspection speed of the battery cell may be significantly increased.

The control unit (not illustrated) controls the operation of the battery cell transfer device 110. The control unit (not illustrated) controls the battery cell transfer device 110 to transfer the battery cells in the tray 140 to the battery cell inspection device 120 and the battery cells that have been inspected in the battery cell inspection device 120 back to the tray 140.

The control unit (not illustrated) controls the operation of the battery cell inspection device 120. The control unit (not illustrated) controls the battery cell inspection device 120 to inspect the electrical characteristics of each battery cell in the preset environment.

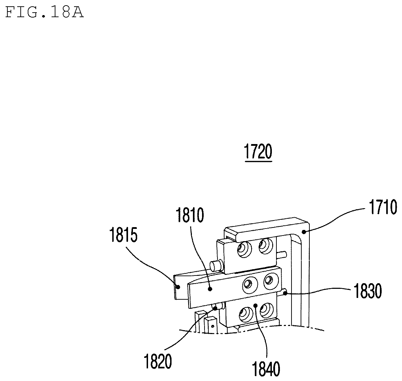

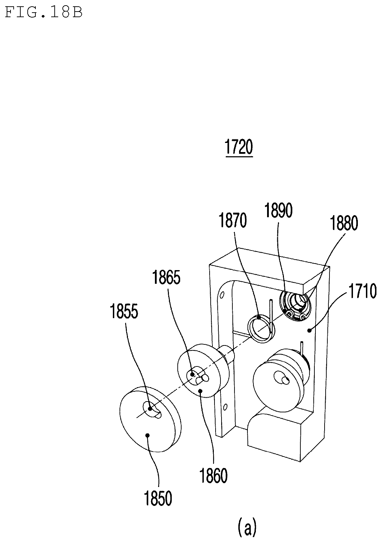

The control unit (not illustrated) is electrically connected to all components that should actively operate among the components 110 to 130 to be described below for the above-described control, such as probe pins (described below with reference to FIG. 18A) and connection rollers (described below with reference to FIGS. 18B to 18D), wires, and may supply control signals and power.

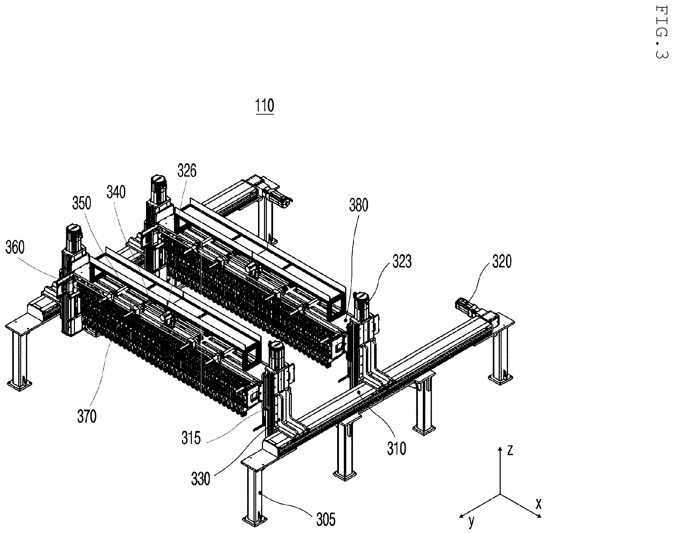

FIG. 3 is a perspective view of the battery cell transfer device according to an embodiment of the present disclosure.

Referring to FIG. 3, the battery cell transfer device 110 according to an embodiment of the present disclosure includes a first rail 310, a second rail 315, a first motor 320, a second motor 323, a third motor 326, a guide body 330, a screw 340, a nut 350, a first shaft 360, a battery cell transfer 370, and a fixed frame 380.

The first rail 310 is formed as an axis (y-axis, hereinafter referred to as the 'first axis') connecting between a first position where the battery cell transfer device 110 may grip and transfer the battery cell within the conveyor 130 and a second position on the opposite side based on the battery cell inspection device 120 within the conveyor 130. The first rail 310 is formed on a support 305 having a preset height (z-axis direction) so that the guide body 330 may move on the first axis along the first rail 310.

Two first rails 310 are arranged facing each other so that two guide bodies 330 may be arranged on each first rail 310. The two first rails 310 are spaced apart from each other so that the fixed frame 380, the second rail 315, and the guide body 330 may be arranged therebetween. The guide body 330 is arranged between the first rails 310 so that the guide body 330 and other components connected thereto may move on the first rail 310.

The second rail 315 is connected to one surface of the guide body 330, and the fixed frame 380 connected thereto is formed as an axis (z-axis, hereinafter referred to as 'second axis') that moves closer to or away from the battery cell inspection device 120/tray 140. The second rail 315 is connected to one surface of the guide body 330, and moves together with the guide body 330 moving along the first rail 310. Meanwhile, the second rail 315 is connected to the fixed frame 380 on the other surface so that the fixed frame 380 and the battery cell transfer 370 connected thereto may move in the first axis direction together with the guide body 330. At the same time, the second rail 315 allows the fixed frame 380 and the battery cell transfer 370 to move on the second axis along the second rail 315.

The second rails 315 are also arranged in pairs facing each other so that the fixed frame 380 may be arranged between each of the second rails 315. The second rails 315 are positioned apart from each other by the length of the fixed frame 380 (on the second axis) so that the fixed frame 380 and the battery cell transfer 370 connected thereto may be arranged.

The first motor 320 supplies power to allow the guide body 330 to move in the first axis direction on the first rail 310. The first motor 320 may be arranged on each of the first rails 310, and the two may be linked to each other to supply power of the same size.

The second motor 323 supplies power to allow the fixed frame 380 connected to one surface of the second rail 315 to move up and down in the second axis direction on the second rail 315. The second motor 323 may also be arranged on each of the second rails 315, and the two may be linked to each other to supply power of the same size.

The third motor 326 supplies power to allow the two battery cell transfers 370 to move closer to or away from each other along the first shaft 360 (to move on the first axis) .

The guide body 330 is connected to the first rail 310 on one surface and to the second rail 315 on the other side, and moves the second rail 315 on the first axis. For example, the guide body 330 may be implemented in an 'L' shape, and may be connected to the first rail 310 on a lower surface (surface facing the inspection device or tray) and to the second rail 315 on a side surface. In particular, a guide part (not illustrated) that may move along the first rail 310 is formed on the lower surface, and may move on the first axis by receiving power from the first motor 320. Meanwhile, since the guide body 330 is connected to the second rail 315 by the other surface, the second rail 315 and the fixed frame 380, which moves on the second rail 315, move on the first axis together. Accordingly, the fixed frame 380 and the battery cell transfer 370 connected thereto may move closer to the tray 140 or the battery cell inspection device 120 by the guide body 330 on the first axis.

The screw 340 and the nut 350 receive power from the third motor 326, and cause each battery cell transfer 370 to be away from or closer to each other on the first axis.

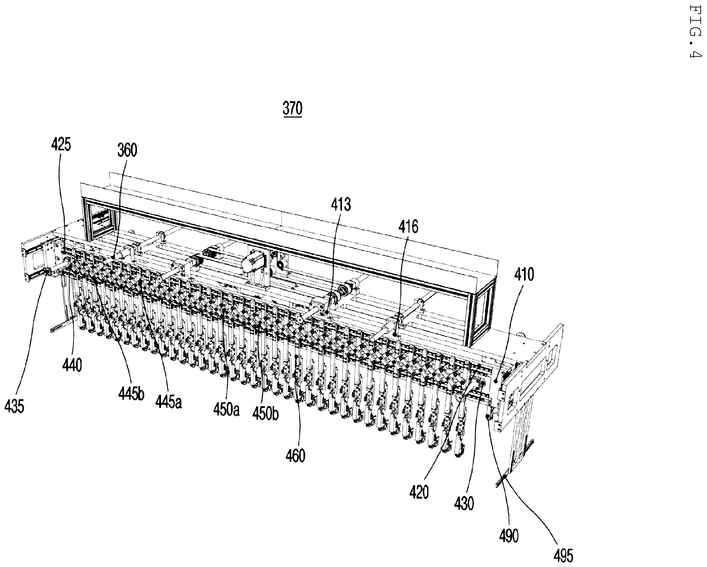

The screw 340 receives power from the third motor 326 to rotate. The screw 340 is arranged on the fixed frame 380 and is fixed so as to be able to rotate without being detached from the fixed position. Meanwhile, the nut 350 is positioned outside (farther from the center) than a first connecting part (413, described below with reference to FIG. 4) in the battery cell transfer 370 based on the center of the screw 340, and moves toward or away from the center of the screw 340 as the screw 340 rotates. The first connecting part 413 in the battery cell transfer 370 is positioned at one position of the screw 340 and moves along the movement of the nut 350 together.The first shaft 360 is positioned on the fixed frame 380 coaxially with the screw 340 and supports the battery cell transfer 370. The second connecting part 416 in the battery cell transfer 370 is mounted on the first shaft 360. The second connecting part 416 moves on the first shaft 360 along with the movement of the battery cell transfer 370 (by the nut 350). Accordingly, the weight of the battery cell transfer 370 is not entirely applied to the screw 340, but is dispersed to the first shaft 360 and the screw 340. The first shaft 360 supports the weight of the battery cell transfer 370 and increases the life of the screw 340.

The battery cell transfer 370 moves on the first axis by the guide body 330 and on the second axis by the fixed frame 380, and grips and transfers the battery cells in the tray 140 or the battery cell inspection device 120. The battery cell transfer 370 moves on the first axis by the guide body 330 moving along the first rail 310 and on the second axis by the fixed frame 380 moving along the second rail 315. Accordingly, the battery cell transfer 370 may move to the tray 140 including the battery cells for inspection or the battery cell inspection device 120 that has completed the inspection, and move toward the tray 140 and the battery cell inspection device 120.

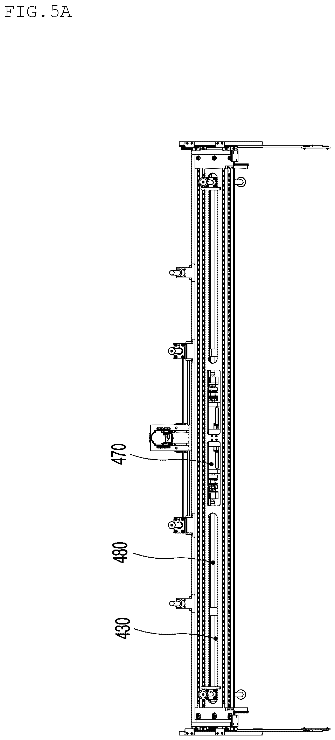

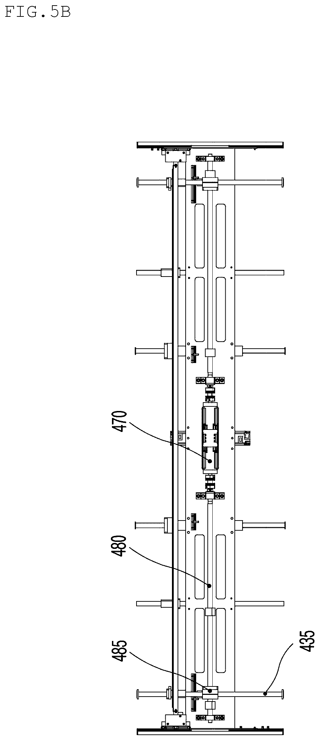

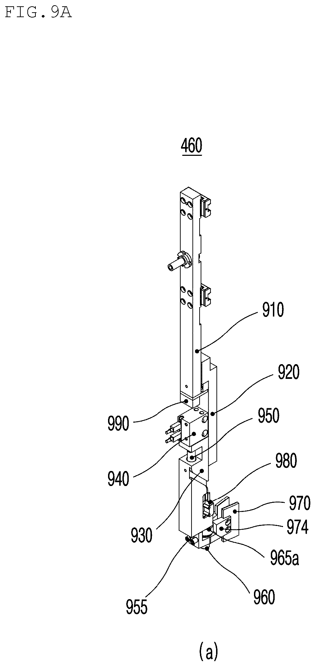

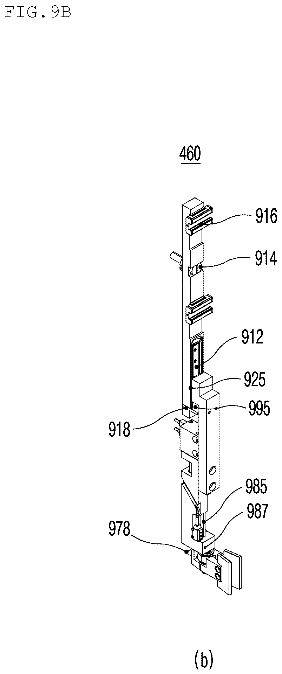

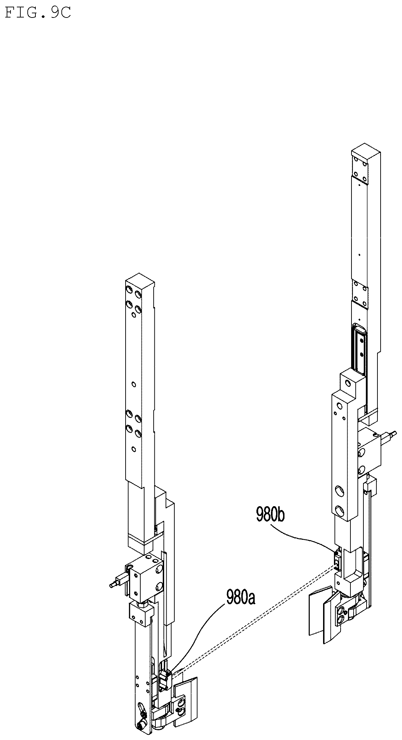

Meanwhile, the battery cell transfer 370 is connected to the screw 340 and the first shaft 360 and grips the battery cells. The battery cell transfer 370 moves to the tray 140 or the battery cell inspection device 120 according to the operation of the above-described configuration. However, each battery cell arranged in the tray 140 or the battery cell inspection device 120 is arranged to have a different width (length on the axis perpendicular to both the first axis and the second axis). Accordingly, the battery cell transfer 370 may move each gripper (described below with reference to FIG. 9 and FIGS. 20 to 22) along an axis (x-axis, hereinafter referred to as a 'third axis') perpendicular to both the first axis and the second axis in order to grip the battery cells in the tray 140 or the battery cell inspection device 120. Since the gap between battery cells in the tray 140 or the battery cell inspection device 120 is determined respectively, each gripper is arranged at the same gap as each gap to grip each battery cell. A specific description of the battery cell transfer 370 will be described below with reference to FIGS. 4 and 5.

The fixed frame 380 is connected to each second rail 315 and fixes the screw 340, the nut 350, the first shaft 360, and the battery cell transfer 370. The fixed frame 380 is connected to each second rail 315 between the second rails 315. The fixed frame 380 moves on the second axis along the second rail 315 and on the first axis along the guide body 330 connected to the second rail 315, and enables parts fixed to the fixed frame 380 to move together therewith.

FIGS. 4 and 5 are perspective views of the battery cell transfer according to an embodiment of the present disclosure.

Referring to FIGS. 4, 5A and 5B, the battery cell transfer 370 according to an embodiment of the present disclosure includes a frame 410, a first connecting part 413, a second connecting part 416, rails 420 and 425, a sliding groove 430, a sliding coupling part 435, a first link member connecting part 440, a second link member connecting part 445, a link member 450, a battery cell gripper 460, a motor 470, a screw 480, a nut 485, a first sensor 490 and a second sensor 495.The frame 410 provides a space in which each component within the battery cell transfer 370 is positioned or operates, and is connected to the fixed frame 380 to support each component within the battery cell transfer 370.The two frames 410 are positioned to face each other with respect to the fixed frame 380 so that two battery cell transfers 370, including the frames 410, may be arranged so that they face each other with respect to the fixed frame 380.

The first connecting part 413 is a structure that protrudes from the frame 410 toward the fixed frame 380, and is coupled to the screw 340 to move the battery cell transfer 370 on the first axis. The first connecting part 413 is implemented in a shape that may be coupled to the screw 340, for example, a shape that includes a hollow (not illustrated) having a cross-sectional area equal to or larger than that of the screw 340, etc., and is connected to the screw 340. The first connecting part 413 is coupled to the screw 340, and the first connection part 413 itself and the entire frame 410 may move with the operations of the screw 340 and the nut 350 accordingly. Accordingly, the first connecting part 413 moves the battery cell transfers 370 facing each other in a direction in which the battery cell transfers 370 move closer to or away from each other.Like the first connecting part 413, the second connecting part 416 is a structure that protrudes from the frame 410 toward the fixed frame 380, and is coupled to the first shaft 360 to support the weight of the battery cell transfer 370 together. The second connecting part 416 is coupled to the first shaft 360 and moves on the first shaft 360 together therewith according to the movement of the first connecting part 413. The second connecting part 416 does not move by separate power, but passively moves by the movement of the first connecting part 413. The second connecting part 416 distributes and supports the weight of the battery cell transfer 370 with the first connecting part 413.

The rails 420 and 425 are formed at corresponding positions with respect to the sliding groove 430 on the frame 410 to prevent the battery cell gripper 460 from being detached and move the battery cell gripper 460. The battery cell gripper 460 is connected to the rails 420 and 425 and a guide part 916 (described below with reference to FIG. 9) and moves on the third axis along the rails 420 and 425. That is, each gripper 460 moves in the same direction on the third axis and moves in a direction closer to or away from each other.

However, not only a pair of rails is formed in the frame 410, but two or more rails may be formed. As described above, the guide part 916 in the battery cell gripper 460 is connected to the rail and moves on the rail. However, in order to grip the battery cells arranged in the tray 140, the gap between each battery cell gripper 460 should be significantly narrowed. The gap between each battery cell gripper 460 may need to be narrower than the guide part 916. In this case, when only one pair of rails is formed in the frame 410, there is a problem that each battery cell gripper 460 does not have the gap it should have to grip the battery cells arranged in the tray 140. To solve this problem, two or more pairs of rails are formed in the frame 410, and adjacent battery cell grippers 460 are connected to different rails by the guide part 916 and move on the rails. Accordingly, any gap may be formed between each battery cell gripper 460.The sliding groove 430 is formed on a third axis within the frame 410 so that the sliding coupling part 435 moves along the third axis within itself.

The sliding coupling part 435 moves closer to or away from each other within the sliding groove 430 by the operations of the motor 470, the screw 480, and the nut 485. The screw 480 is arranged on a third axis, and the nut 485 is arranged on the screw 480, but is coupled to a portion of the sliding coupling part 435 and moves together therewith. The screw 480 receives power from the motor 470 to rotate, and the sliding coupling part 435 moves closer to or away from each other along the sliding groove 430 according to the rotation of the screw 480. A portion of the sliding coupling part 435 protrudes from the inside of the frame 410 (in the direction in which the two frames face each other) to the outside of the frame 410 (in the direction in which the two frames do not face each other) through the sliding groove 430. As the sliding coupling part 435 protrudes, the link member 450 may be connected to the protrusion of the sliding coupling part 435.

The first link member connecting part 440 has a hinge structure and fixes the link member 450 and the battery cell gripper 460, thereby allowing the link member 450 to rotate. The first link member connecting parts 440 at both ends close to the sliding coupling part 435 are connected to the link member 450 and the battery cell gripper 460, but are connected to the sliding coupling part 435, receive a force in a third axis direction from the sliding coupling part 435, and transmits the force to the link member 450 and the battery cell gripper 460.

Meanwhile, the second link member connecting part 445 has a hinge structure and is connected to the link members 450a and 450b, respectively, thereby allowing the link member 450 to rotate.

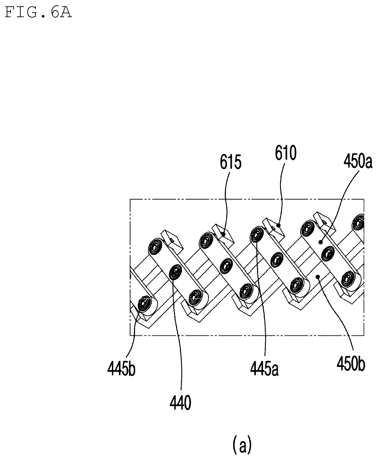

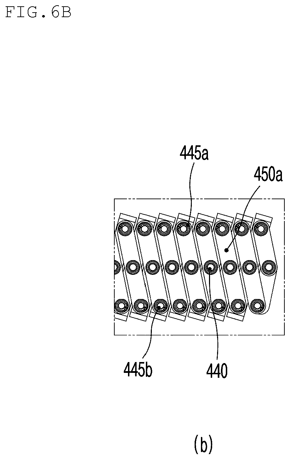

The link members 450a and 450b are arranged in a pair that intersect in an 'X' shape, and the first link member connecting part 440 is connected to the intersection (center) of the two members, and the second link member connecting part is connected to each end of the link member 450. A more specific structure is described with reference to FIGS. 6 to 8.

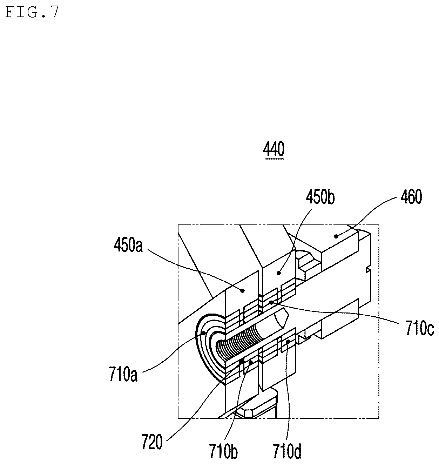

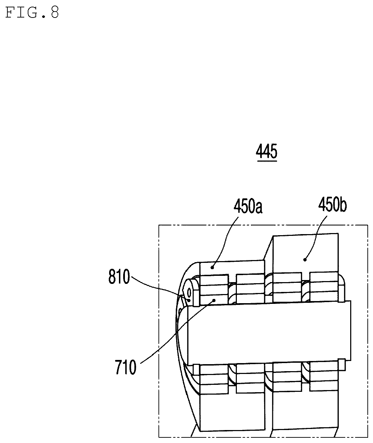

FIG. 6 is an enlarged view of the link members and the link member connecting part according to an embodiment of the present disclosure, FIG. 7 is a cross-sectional view of the first link member connecting part according to an embodiment of the present disclosure, and FIG. 8 is a cross-sectional view of the second link member connecting part according to an embodiment of the present disclosure.

Referring to FIGS. 6A and 6B, the link members 450 and the link member connecting parts 440 and 445 are connected as described above. When the first link member connecting part 440 receives an external force in the third axis direction from the sliding coupling part 435, each link member 450 connected to the first link member connecting part 440 rotates. The link members 450 rotate to move away from each other (increasing the angle therebetween) or closer to each other. For example, when the link members 450 coupled to the first link member connecting part 440 move away from each other, each link member coupled to the second link member connecting part 445 moves closer to each other (decreasing the angle therebetween). In this way, as the link members coupled to the first link member connecting part 440 move away from each other and the link members coupled to the second link member connecting part 445 move closer to each other, the sliding coupling part 435 moves closer to each other, and the gap between the battery cell grippers 460 coupled to the first link member connecting part 440 decreases. On the other hand, when the link members 450 coupled to the first link member connecting part 440 move closer to each other, each link member coupled to the second link member connecting part 445 moves away from each other. In this way, as the link members coupled to the first link member connecting part 440 move closer to each other and the link members coupled to the second link member connecting part 445 move away from each other, the sliding coupling part 435 moves away from each other, and the gap between the battery cell grippers 460 coupled to the first link member connecting part 440 increases. As the link members 450 and each link member connecting part 440 and 445 are connected as described above, the gap between each battery cell gripper 460 is adjusted using the force transmitted from the sliding coupling parts 435.

In this case, since each link member 450 is intersected and connected in an 'X' shape, the link member 450b that is arranged to be relatively close to the frame 410 and the link member 450a that is arranged to be away from the frame 410 are distinguished in any link member connecting part 440 and 445. In this case, the link member 450b includes a protrusion 610 that protrudes in a direction toward the link members 450a (in a direction away from the frame 410) at both ends. A coupling hole 615 into which the coupling member (not illustrated) such as a screw may be coupled is implemented within the protrusion 610. The coupling member (not illustrated) is coupled to the coupling hole 615, and the coupling member (not illustrated) comes into physical contact with the link member 450a connected to the second link member connecting part 445. By using this, the connecting member (not illustrated) connected to the connecting hole 615 may adjust the degree to which the link member 450a rotates in the second link member connecting part 445. Even if the link members 450 and the link member connecting parts 440 and 445 are manufactured under the same process conditions and in the same environment, a microscopic tolerance inevitably occurs. As a result, even if the gap between the respective battery cell grippers 460 is adjusted to be as close as possible (by moving the sliding coupling part 435 to become as close to each other as possible), the gap between the respective battery cell grippers 460 may vary slightly due to the above-described tolerance. This may not be fatal if the gap between the battery cells is above a certain level, such as in the battery cell inspection device 120. However, like the gap between the battery cells arranged in the tray 140, when the gap between the battery cells is below a certain level, the above-described error may be fatal. To resolve this, the link member 450b includes the protrusion 610 and the coupling hole 615, and the coupling member (not illustrated) may be coupled to each coupling hole 615 at a preset depth. Here, when the link members connected to the second link member connecting part 445 come close to each other, the preset depth means a depth at which the gap between the first link member connecting parts 440 are equal to each other. The depth at which the coupling member (not illustrated) is coupled to the coupling hole 615 in each link member 450b may be different from each other. Accordingly, even if the tolerance occurs in each configuration during the manufacturing process, this may be resolved by coupling the coupling member (not illustrated) to each coupling hole 615 at a preset depth.

Meanwhile, the first link member connecting part 440 is coupled to the link member 450 and the battery cell gripper 460 as illustrated in FIG. 7.

Referring to FIG. 7, the first link member connecting part 440 is connected to each link member 450a and 450b and bearings 710a to 710d, and a spacer 720 is arranged for each bearing 710a to 710d. The first link member connecting part 440 includes the bearing 710 and the spacer 720 so that no tolerance (clearance) occurs in the direction of the rotation axis.

On the other hand, the second link member connecting part 445 is connected to each link member 450a and 450b as illustrated in FIG. 8.

Referring to FIG. 8, the second link member connecting part 445 also includes the bearing 710 and is connected to the link member 450, but instead of including the spacer, includes a stopper 810 at the outermost side (direction farthest from the frame) to prevent the bearing 710 from being detached.

As the link member connecting parts 440 and 445 have different shapes, they have the following advantages. Since the first link member connecting part 440 couples not only the link member but also the battery cell gripper 460, it does not allow any movement in the direction of the rotation axis. However, when the bearings 710 continue to rotate and operate without any clearance, the bearings 710 may be worn or damaged.

On the other hand, since the second link member connecting part 445 has clearance in the axial direction, it not only prevents wear or damage like the first link member connecting part 440, but also buffers the decrease in lifespan due to fatigue occurring in the bearing 710 in the first link member connecting part 440.

Referring back to FIGS. 4 and 5, the battery cell gripper 460 is implemented in multiple units (as many as the number of battery cells) to grip each battery cell. The specific structure of the battery cell gripper 460 is described below with reference to FIG. 9 and FIGS. 20 to 22.

The motor 470, the screw 480, and the nut 485 perform the above-described operation and move the sliding coupling part 435 from the sliding groove 430 to the third axis. As the sliding coupling part 435 moves, the link members 450 rotate together therewith by the link member connecting parts 440 and 445 to adjust the gap between the respective battery cell grippers 460.

The first sensor 490 senses whether the battery cell gripper 460 has completely gripped the battery cell. The first sensor 490 determines whether a second frame 920 (described below with reference to FIG. 9 and FIGS. 20 to 22) moves up to a preset height or higher. The first sensors 490 are arranged at both ends of the frame 410, and one of them irradiates light and the other receives light at a preset height (in the second axis direction) based on when the second link frame 920 is lowered the most. When the battery cell gripper 460 grips the battery cell without any special abnormality, the second link frame 920 is lowered along a slide rail 912 (described below with reference to FIG. 9) due to the weight of the battery cell. Unless there is any special abnormality, the second link frame 920 remains in a state of being lowered along the slide rail 912. On the other hand, when the battery cell or other configuration and the battery cell gripper 460 collide, the second link frame 920 may move up. The first sensor 490 detects such abnormal rising of the second link frame 920 within the battery cell gripper 460 and determines whether the battery cell gripper 460 has completely gripped the battery cell or whether an abnormality has occurred.

On the other hand, the second sensor 495 senses whether the battery cell gripper 460 is gripping the battery cell. Like the first sensor 490, the second sensor 495 is also arranged at both ends of the frame 410 so that one of the sensors irradiates light and the other receives light. However, unlike the first sensor 490, the second sensor 495 transmits and receives light at a position that is relatively lower than the height at which the battery cell may be positioned in the second axis direction when the battery cell gripper 460 grips the battery cell. The second sensor 495 transmits and receives light at the height and senses whether the battery cell gripper 460 releases the battery cell that the battery cell gripper 460 is gripping.

FIG. 9 is a diagram illustrating a configuration of the battery cell gripper according to an embodiment of the present invention.

Referring to FIG. 9, the battery cell gripper 460 according to an embodiment of the present disclosure includes first to third link frames 910 to 930, a slide rail 912, a link member fixing pin 914, guide parts 916 and 925, a stopper support part 918, an actuator 940, a cylinder 950, a hinge axis 960, a bearing 965, a grip part 970, a grip body 974, a grip projection 978, an angle detection sensor 980, an angle adjustment shaft 985, a sensor fixing hole 987, a first stopper 990, and a second stopper 995.

The first link frame 910 is connected to the rails 420 and 425 and supports the remaining components within the battery cell gripper 460. The first link frame 910 uses the guide part 916 to connect the battery cell gripper 460 to the rails 420 and 425 and to move on the third axis along the rail.

The third link frame 930 supports components capable of gripping the battery cell in the battery cell gripper 460.

The second link frame 920 connects the first link frame 910 and the third link frame 930.

The slide rail 912 is formed in the first link frame 910 to allow the second link frame 920 to move up and down along the guide part 925 (along the second axis). The second link frame 920 is normally lowered by its own weight or by the weight of the battery cell when the grip part 970 grips the battery cell.

However, when the grip part 970 fails to grip the battery cell and collides with the battery cell or other components, the second link frame 920 moves up and down along the slide rail 912. When there is no the slide rail 912, if the grip part 970 and other components collide, the impact force is directly transmitted to each component. This may cause damage to the grip part 970 or other components (such as the battery cell). The slide rail 912 prevents damage to each component in the above-described situation.

As illustrated in FIG. 9C, the link member fixing pin 914 protrudes in the direction in which the first link member connecting part 440 is coupled to the battery cell gripper 460, thereby fixing the first link member connecting part 440 to the battery cell gripper 460. Accordingly, the first link member connecting part 440 may couple the link member 450 and the battery cell gripper 460.

The guide part 916 is connected to the rails 420 and 425, and moves the first link frame 910 and all the components connected or formed therewith on the rail (on the third axis).

The stopper support part 918 is formed at the end of the first link frame 910 far from the rails 420 and 425, and provides a space in which the stoppers 990 and 995 are arranged. The stopper support part 918 arranges and supports the stoppers 990 and 995.

The actuator 940 is connected to the cylinder 950, and raises and lowers the cylinder 950 (on the second axis) so that it moves closer to or away from the grip projection 978. The actuator 940 is implemented as a pneumatic cylinder, etc., and supplies power to enable the cylinder 950 connected thereto to move up and down.

The cylinder 950 is positioned in the third link frame 930 and receives power from the actuator 940 to move up and down. The cylinder 950 is arranged in a guide tube (not illustrated) formed to have a cross-sectional area equal to or larger than its own cross-sectional area in the third link frame 930, and moves up and down without being detached. Meanwhile, the end 955 near the grip projection 978 of the cylinder 950 is implemented in a wedge shape. As the corresponding end 955 of the cylinder 950 is implemented in a wedge shape, the cylinder 950 may naturally enter between the grip projections 978 without resistance as it is lowered.

In this case, the cylinder 950, particularly an end 955 having a wedge shape, may be implemented with a heat-treated component. Conventionally, the cylinder 950 was implemented with a resin gel or a non-heat-treated component, but there was a problem that it quickly wears out due to contact with the grip projection and the like many times. To prevent this, the cylinder 950, especially the end 955, is implemented with heat-treated components to minimize wear.

The hinge axis 960 causes the grip body 974 to rotate around itself. The hinge axis 960 is positioned at a point of the grip body 974, so that the grip body 974 operates on the principle of a lever. That is, when the grip projection 978 is opened by the end 955 of the cylinder, the gap between the grip parts 970 narrows, and when the end 955 of the cylinder is separated and the gap between the grip projections 978 narrows, the gap between the grip parts 970 spreads.

The bearing 965 and the grip body 974 are connected to the hinge axis 960, rotate around the hinge axis, and operate on the principle of the lever. The grip body 974 is implemented in two pieces, and a portion of the position where the hinge axis is to be arranged is etched in the shape of the hinge axis 960 so that the hinge axis 960 may be arranged. Since two grip bodies 974 should be arranged with the hinge axis therebetween, one of the grip bodies 974 is etched in a semicircle. The bearing 965 is arranged in the etched area. The bearing 965 is arranged, and the grip body 974 rotates around the hinge axis 960, so that the grip part 970 and the grip projection 978 operate on the principle of the lever.

Here, like a flange bearing, the bearing 965 may be implemented as two parts that have different diameters at one end and the other end and have a step. The other ends (relatively smaller diameter ends) of the two parts may be arranged to face each other, and accordingly, a space is formed in the bearing 965 (between the ends of each part) in which a portion of the grip body 974 may be arranged. The distance between the ends of each part in the bearing 965 is implemented to be the same as the thickness of a portion of the grip body 974, so that the bearing 965 and the grip body 974 may be prevented from being separated from each other.

The grip part 970 is formed with a preset area at one end of the grip body 974, and moves away from or closer to each other according to the operation of the cylinder 950 to grip the battery cell.

The grip part 970 is formed with a preset area at one end of the grip body 974. As described above, the grip body 974 is implemented in two pieces, and the grip part 970 is also formed on each grip body 974. The grip part 970 has a preset area, and may grip the battery cell by the area when the battery cell is positioned between the gaps between the grip parts 970. Accordingly, the grip part 970 prevents damage to the grip part 970 or the battery cell that may occur by gripping at one point.The grip projection 978 is formed in a protruding shape at the other end of the grip body 974. The grip projection 978 protrudes in a cylindrical shape so that the end 955 of the cylinder may smoothly enter between the grip projections 978. When the end 955 of the cylinder enters between the grip projections 978, the two grip projections 978 spread apart and the gap between the grip parts 970 decreases.

The angle detection sensor 980 detects whether the battery cells are arranged between the grip part 970. The angle detection sensors 980 are arranged on each battery cell gripper 460, and arranged facing each other to irradiate light from one to the other. However, the angle detection sensors 980 are not arranged on the same line, but are arranged diagonally in a '/' direction to irradiate and receive light. When the angle detection sensors 980 irradiate light on the same line, there may be cases where the battery cell is not detected. To resolve this, a pair of angle detection sensors 980 is arranged diagonally to detect the battery cell.

The angle adjustment shaft 985 adjusts a light emission direction and a light reception direction of the angle detection sensor 980. The angle adjustment shaft 985 is arranged adjacent to the angle detection sensor 980, and changes the light emission direction and light reception direction of the angle detection sensor 980 according to its rotation. In order to grip the battery cell in the tray 140, each battery cell gripper 460 moves to have a relatively narrow gap. Accordingly, light irradiated from the angle detection sensor 980 in one battery cell gripper 460 may travel to the angle detection sensor 980 in the adjacent other battery cell gripper 460. The angle adjustment shaft 985 adjusts the light emission direction and light reception direction of the angle detection sensor 980 in each battery cell gripper 460 to prevent the occurrence of the above-described problem.

The sensor fixing hole 987 fixes the angle detection sensor 980 whose angle is adjusted by the angle adjustment shaft 985. The sensor fixing hole 987 receives a fixing means (not illustrated, for example, a fixing bar, etc.) into its interior so that the angle adjustment shaft 985 no longer tilts (adjusts the light emission direction and light reception direction) the angle detection sensor 980.

The first stopper 990 is arranged on the lower surface of the stopper support part 918 facing the third link frame 930 to prevent damage due to the collision between the cylinder 950 and the stopper support part 918. The cylinder 950 may receive power from the actuator 940 to move up to the stopper support part 918. In this case, when there is no separate configuration, the cylinder 950 and the stopper support part 918 may collide, and a problem may occur in which one or both of them is damaged. To prevent this, the first stopper 990 is arranged on the above-described surface of the stopper support part 918 to prevent damage to the stopper support part and the cylinder 918 and 950.

The second stopper 995 is arranged between the stopper support part 918 and the second link frame 920 on the upper surface of the stopper support part 918 (the opposite surface to the surface on which the first stopper is arranged), thereby preventing the collision between the second link frame 920 and the stopper support part 918 and reducing the lateral moment generated in the guide part 916 due to the movement of the battery cell gripper 460.

The second stopper 995 is arranged at the above-described position, thereby preventing damage to both the second link frame 920 and the support part 918 due to the collision, like the first stopper 990.

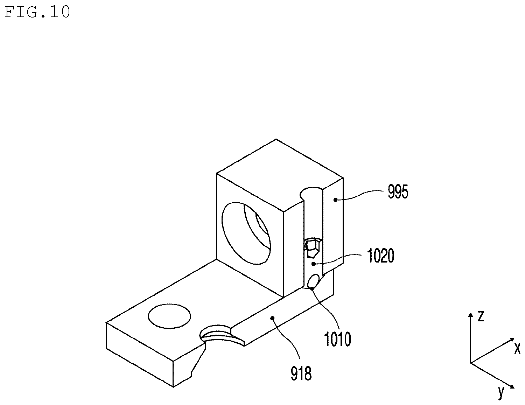

The second stopper 995 reduces the lateral moment generated in the guide part 916. The guide part 916 inevitably has a characteristic of being vulnerable to the lateral moment generated. In particular, since the weight of all components of the battery cell gripper 460 is applied to the guide part 916, the guide part 916 becomes vulnerable to the lateral moment (moment in the first axial direction and the third axial direction). To prevent this, the stopper support part 918 and the second stopper 995 have the structure illustrated in FIG. 10.

FIG. 10 is an enlarged cross-sectional view of a second stopper and a stopper support part according to an embodiment of the present invention.

Referring to FIG. 10, the second stopper 995 includes a groove 1010 that is recessed toward its center on a surface facing the stopper support part 918. Meanwhile, the stopper support part 918 includes a protrusion 1020 that protrudes toward the second stopper 995 in a shape corresponding to the groove 1010 on a surface facing the second stopper 995. In this way, when the second stopper 995 is arranged on the stopper support part 918, the groove 1010 and the protrusion 1020 are additionally coupled. Accordingly, the guide part 916 becomes more resistant to the moment applied to the first axis (x-axis direction in FIG. 10) and the third axis (y-axis direction in FIG. 10) by the coupling of both the groove 1010 and protrusion 1020, and the (unnecessary and unintended) movement of the second link frame 920 toward the corresponding axis may be minimized.

In this case, the protrusion 1020 may be implemented as a headless bolt, and a screw thread may be implemented in the stopper support part 918. The protrusion 1020 is connected to the stopper support part 918 by a screw connection, and the degree of protrusion may be adjusted. Accordingly, the bonding strength (fastening force) of the protrusion 1020 and the stopper support part 918 may be improved, and the degree of protrusion of the protrusion 1020 may be adjusted as needed.

Meanwhile, in FIG. 10, the second stopper 995 is illustrated as including the groove 1010 and the stopper support part 918 as including the protrusion 1020, but is not necessarily limited thereto. The stopper support part 918 may include the groove 1010 and the second stopper 995 may include the protrusion 1020 and may have the above-described features.

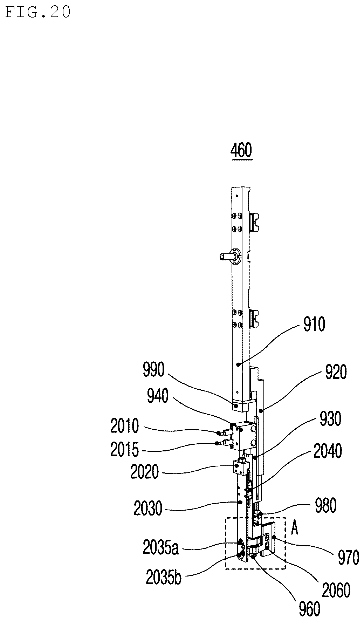

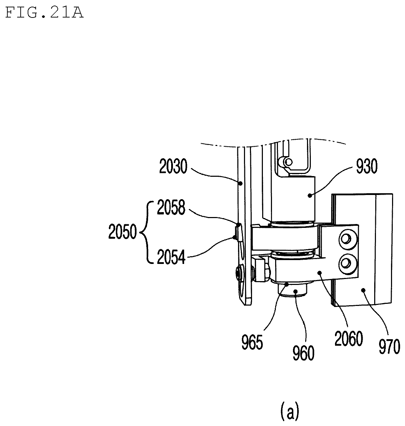

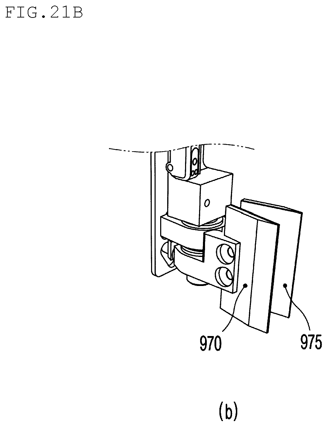

FIG. 20 is a diagram illustrating a configuration of a battery cell gripper according to another embodiment of the present disclosure, and FIG. 21 is an enlarged view of a portion A of the battery cell gripper according to another embodiment of the present disclosure.

Referring to FIGS. 20 and 21, a battery cell gripper 460 according to another embodiment of the present disclosure includes first to third link frames 910 to 930, a slide rail (not illustrated), a link member fixing pin (not illustrated), a guide part (not illustrated), a stopper support part (not illustrated), an actuator 940, panel detection sensors 2010 and 2015, a panel fixing part 2020, a panel 2030, a guide groove 2035, an LM guide 2040, a hinge axis 960, a bearing 965, a grip part 970, a grip projection 2050, a grip body 2060, an angle detection sensor 980, an angle adjustment shaft 985, a first stopper 990, and a second stopper 995. Here, the first to third link frames 910 to 930, the slide rail (not illustrated), the link member fixing pin (not illustrated), the guide part (not illustrated), the stopper support part (not illustrated), the actuator 940, the hinge axis 960, the bearing 965, the grip part 970, the angle detection sensor 980, the angle adjustment shaft 985, the first stopper 990, and the second stopper 995 perform the same operation as the same configuration in the battery cell gripper 460 according to an embodiment of the present disclosure, and thus, a detailed description thereof will be omitted.

The panel detection sensor 2010 and 2015 detect the operation of the actuator 940 to detect the movement of the panel 2030. The panel 2030 moves up or down according to the operation of the actuator 940. The panel detection sensor 2010 and 2015 detects the actuator 940 that raises or lowers the panel 2030, and detects whether the panel 2030 moves up or down. According to the physical connection between the grip projection 2050 and the guide groove 2035 in the panel 2030, the grip part 970 physically moves along with the movement of the panel 2030. In other words, detecting the movement of the panel 2030 is equivalent to detecting the movement of the grip part 970. When foreign substances are positioned between the grip parts 970 and the gap between the grip parts 970 may not be narrowed, the movement of the panel 2030 is also restricted. The panel detection sensor 2010 and 2015 detects the movement of the panel 2030 in this way and determines whether the gap between the grip parts 970 may not be narrowed or widened due to the foreign substances, etc.

The panel fixing part 2020 transmits power transmitted from the actuator 940 to the panel 2030. The panel fixing part 2020 is coupled to the actuator 940 at one end and the panel 2030 at the other end, and transmits power transmitted from the actuator 940 to the panel 2030. Accordingly, the panel fixing part 2020 and the panel 2030 move up or down according to the power provided by the actuator 940.

The panel 2030 moves up and down by the actuator 940 and adjusts the gap between the grip parts 970.

The panel 2030 includes at least two guide grooves 2035 at the end opposite to the end where the panel fixing part 2020 is positioned. Each guide groove 2035 is formed at an end of the panel 2030 in a direction perpendicular to the direction of movement of the panel 2030, but is formed in the form of an oblique line in which ends are closer to each other. The grip projection 2050 is arranged within the guide groove 2035. When the panel 2030 moves up or down, the grip projection 2050 moves along the guide groove 2035, and the grip body 974 and the grip part 970 rotate by the hinge axis 960. Accordingly, the gap between the grip part 970 becomes closer or farther apart. In this way, the panel 2030 includes the guide groove 2035, and by arranging the grip projection 2050 within the guide groove 2035, the grip part 970, etc., rotates.

The LM guide 2040 is arranged between the third link frame 930 and the panel 2030, and assists in the raising and lowering of the panel 2030. The LM guide 2040 assists in the raising and lowering of the panel 2030 at the above-described position, and prevents the panel 2030 from being detached from the moving axis.

The grip projection 2050 is formed in a protruding form at the other end of the grip body 974 (the end far from the grip part), or is connected (to the grip body) in a protruding form at the other end of the grip body 974, and moves along the guide groove 2035. The grip projection 2050 includes a fixed axis 2054 and a rotating roller 2058 arranged on the outside thereof. The rotating roller 2058 comes into contact with one surface of the guide groove 2035, and moves the guide groove 2035 according to the raising and lowering of the panel 2030. As described above, since the guide groove 2035 is formed diagonally and ends are formed so that they are close to each other, the gap between the grip projections 2050 is maintained constant even when the panel 2030 moves up and down, but the relative positions of each grip projection 2050 before and after the panel 2030 moves up and down change. Accordingly, the grip projection 2050 moves along the guide groove 2035, and the grip body 974 and the grip part 970 rotate by the hinge axis 960.

The grip body 2060 includes the grip part 970 formed or connected to a preset area at one end, and the grip projection 2050 formed or connected to a protruding shape at the other end. The grip body 2060 has a thickness equal to the gap of the space formed in the bearing 965 as described above, excluding the grip part 970 and the grip projection 2050. Accordingly, the grip body 2060 has a form in which it is stacked vertically. Accordingly, the grip projections 2050 also have the gap in the vertical direction therebetween.

Meanwhile, the grip part 970 may include a silicone coating surface 975 as a surface facing each other. The silicone coating surface 975 is formed by coating a silicone component on the surface facing each other between the grip parts 970, and may improve the gripping force of the grip part 970 for the battery cell by improving the frictional force. Conventionally, the silicone was implemented in a form in which it was adhered to the above-described surface of the grip part, but after a certain period of time, the silicone may detach from the grip part and fall off into the battery, etc. In order to prevent this, the grip part 970 may include the silicone coating surface 975.

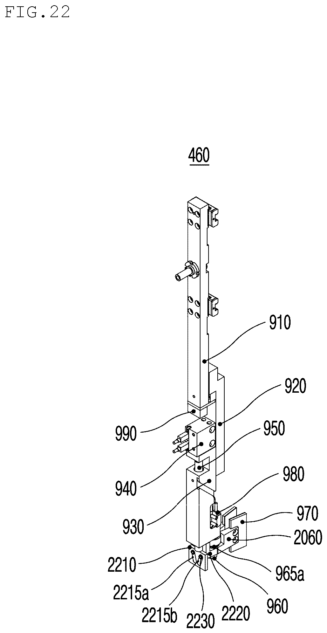

FIG. 22 is a diagram illustrating a configuration of the battery cell gripper according to another embodiment of the present invention.

Referring to FIG. 22, the battery cell gripper 460 according to another embodiment of the present disclosure includes first to third link frames 910 to 930, a slide rail (not illustrated), a link member fixing pin (not illustrated), a guide part (not illustrated), a stopper support part (not illustrated), an actuator 940, a cylinder 950, a grip projection guiding panel 2210, a guide groove 2215, a hinge axis 960, a bearing 965, a grip part 970, a grip projection 2230, a grip body 2060, a grip projection fixing part 2220, an angle detection sensor 980, an angle adjustment shaft 985, a first stopper 990, and a second stopper 995. Here, the first to third link frames 910 to 930, the slide rail (not illustrated), the link member fixing pin (not illustrated), the guide part (not illustrated), the stopper support part (not illustrated), the actuator 940, the hinge axis 960, the bearing 965, the grip part 970, the grip body 2060, the angle detection sensor 980, the angle adjustment shaft 985, the first stopper 990, and the second stopper 995 perform the same operation as the same configuration in the battery cell gripper 460 according to an embodiment of the present disclosure or the battery cell gripper 460 according to another embodiment of the present disclosure, and thus, a detailed description thereof will be omitted.

The grip projection guiding panel 2210 is connected to the end of the cylinder 950 (close to the grip projection) and rotates the grip part 970 according to the operation of the cylinder 950.

The grip projection guiding panel 2210 is connected to the above-described end of the cylinder 950 and moves up and down together with the raising and lowering of the cylinder 950.

In this case, the grip projection guiding panel 2210 includes at least two guide grooves 2215. Each of the guide grooves 2215 is formed in the same direction as the moving direction of the grip projection guiding panel 2210, but is formed in the form of a diagonal line in which one of the ends moves closer to each other. The grip projection 2230 is arranged in the guide groove 2215, and the grip part 970, etc., rotate as described above.

Meanwhile, the grip projection fixing part 2220 is formed at the other end of the grip body 2060, and the grip projection 2230 is formed or connected in a protruding form to the grip projection fixing part 2220. The grip projection fixing part 2220 formed in the grip body 2060 arranged at the bottom has a form that protrudes upward, and the grip projection fixing part 2220 formed in the grip body 2060 arranged at the top has a form that protrudes downward. Accordingly, the surface that contacts the grip projection guiding panel 2210 in the grip projection fixing part 2220 has the same area.

As the grip projection fixing part 2220 is formed, the grip projection 2230 may be positioned at the same height in the direction in which the grip projection guiding panel 2210 moves. The grip projections 2230 are formed at the same height, and move closer or away from each other along the guide groove 2215 to rotate the grip part 970.

FIG. 11 is a perspective view of a battery cell inspection device according to an embodiment of the present invention.

Referring to FIG. 11, the battery cell inspection device 120 according to an embodiment of the present disclosure includes a pressurizing member 1110, a jig press plate 1120, a pressure plate 1125, a jig plate 1130, a battery cell fixing module 1140, a first rail 1150, a second rail 1155, a frame 1160, a first fixing plate 1164, a second fixing plate 1168, a pressure sensor 1170, a support plate 1180, an elastic member 1185, and a guide cylinder 1190.

The pressurizing member 1110 receives power from an external source to pressurize the jig press plate 1120. For example, like a jack screw, the pressurizing part 1110 may be implemented as a configuration that receives rotational force and converts it into a linear reciprocating motion, or may be implemented as a configuration that receives power and performs a linear reciprocating motion.

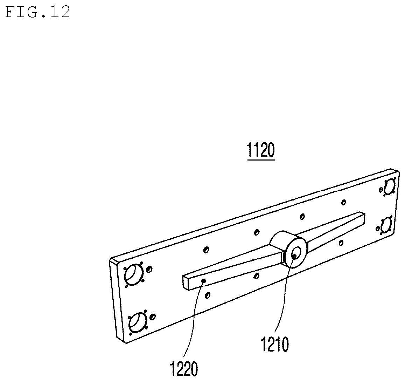

The jig press plate 1120 receives pressure from the pressurizing part 1110 and applies pressure to each jig plate 1140 and the battery cell arranged between the jig plates. The jig press plate 1120 has a structure as illustrated in FIG. 12.

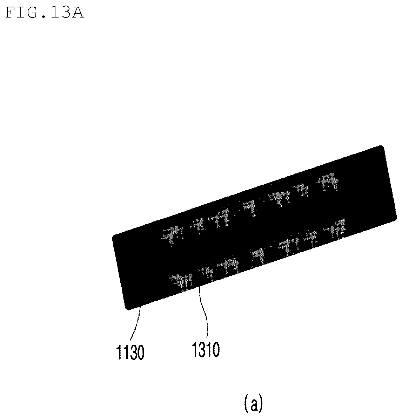

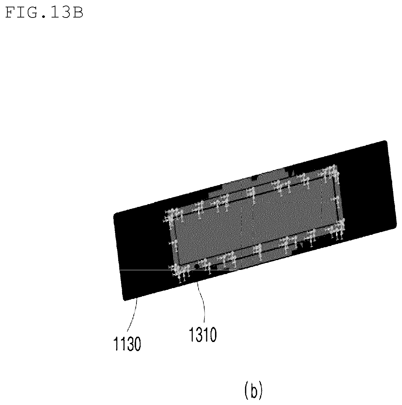

FIG. 12 is a perspective view of the jig press plate according to an embodiment of the present disclosure, and FIG. 13 is a diagram illustrating a portion where pressure is applied to the jig plate by the jig press plate according to an embodiment of the present disclosure.

Referring to FIG. 12, the jig press plate 1120 according to an embodiment of the present disclosure includes a pressurizing part 1210 and a wing part 1220.

The jig press plate 1120 is implemented as a rectangular shape whose length in the length direction is relatively longer than its length in the height direction.

The pressurizing part 1210 is physically connected to the pressurizing member 1110, and receives pressure from the pressurizing member 1110 to pressurize other members.

The wing part 1220 is a part that extends in each length direction from the pressurizing part 1210 and disperses the pressure transmitted by the pressurizing member 1110. Since the wing part 1220 exists and disperses the pressure, the jig press plate 1120 may apply uniform pressure to the battery cell arranged between the jig press plate 1120 and the jig plate. This is supported by FIG. 13.

Referring to FIG. 13A, when only the pressurizing part is present, it may be confirmed that the pressure is not evenly applied to the area 1310 corresponding to the battery cell in the jig plate 1130 (expressed in a simplified manner in FIG. 13), but is concentrated only on the central portion.

On the other hand, referring to FIG. 13B, it may be confirmed that the pressure is evenly applied to the area 1310 corresponding to the battery cell due to the presence of the wing part 1220.

Referring back to FIG. 12, the wing part 1220 extends only in the longitudinal direction. When the wing part 1220 extends in the height direction instead of the longitudinal direction, the pressure may be less dispersed in the longitudinal direction and may not be evenly distributed. Therefore, the wing part 1220 extends only in the longitudinal direction from the pressurizing part 1210.

In addition, the wing part 1220 may be implemented as a structure having at least an inclined plane (triangle) as it extends from the pressurizing part 1210. The wing part 1220 has a predetermined length of the surface that contacts the jig plate, and may be implemented as at least an inclined plane shape. The wing part 1220 may be implemented as a fan shape or a square shape instead of an inclined plane under the assumption that the surface contacting the jig plate has a predetermined length.

Referring back to FIG. 11, the pressurizing plate 1125 is arranged on the opposite side of the jig press plate 1120, and receives the pressure transmitted through the jig press plate 1120 and the jig plate 1130.

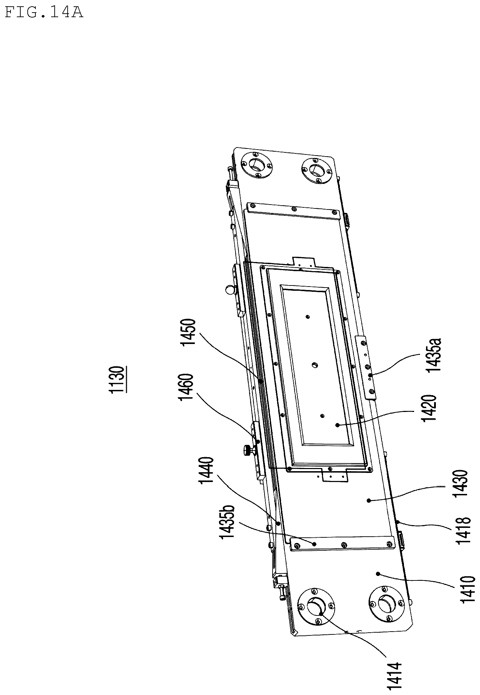

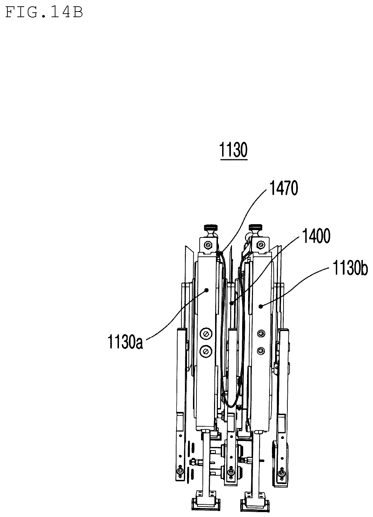

The jig plate 1130 includes one more number than the number of battery cells to be tested at one time, and pressurizes the battery cells by arranging the battery cells therebetween. The jig plates 1130 and the battery cell arranged between the jig plates 1130 are illustrated in FIG. 14.

FIG. 14 is a perspective view of the jig plate according to an embodiment of the present invention.

Referring to FIG. 14, the jig plate 1130 according to an embodiment of the present disclosure includes a jig frame 1410, a guide hole 1414, a rail 1418, a pad 1420, a pad fixing plate 1430, a support sheet height adjustment part 1440, a support sheet fixing part 1450, and a support sheet support part 1460.

The jig frame 1410 provides a space in which other components within the jig plate 1130 are arranged or fixed. The jig frame 1410 has a constant area and width (a length in a direction in which the pressurizing member applies pressure in FIG. 11) so that each component may be arranged and fixed.

The guide hole 1414 is formed as a through hole in the jig frame 1410 so that the guide cylinder 1190 may pass through the jig plate 1130. As the guide cylinder 1190 passes through the guide hole 1414, the jig plate 1130 may move along the axis (third axis) formed by the cylinder along the guide cylinder 1190.

The rail 1418 is formed along the jig frame 1410 at the lowest end of the jig frame 1410 so that the battery cell fixing module 1140 coupled to the rail 1418 moves along itself. Since the jig plate 1130 including the jig frame 1410 should pressurize the battery cell mounted thereon, it is arranged to face the first axis and moves along the third axis to pressurize the battery cell. The rail 1418 is formed toward the first axis at the above-described position. Accordingly, the battery cell fixing module 1140 coupled to the rail 1418 may move on the first axis along the rail 1418 and move toward or away from the battery cell.

The pad 1420 is arranged on a surface facing the adjacent jig plate 1130 within the jig frame 1410 to prevent damage to the battery cell when pressurizing the battery cell. The pad 1420 is implemented with a material that is elastic or has a hardness lower than a preset reference value (not hard) to prevent damage due to the contact while buffering the impact when in contact with the battery cell.

The pad fixing plate 1430 fixes the pad 1420 to the above-described surface of the jig frame 1410. The pad fixing plate 1430 is fixed to the jig frame 1410 by the fixing part 1435. Meanwhile, the pad fixing plate 1430 fixes the pad to a portion (e.g., the center). For example, the pad fixing plate 1430 includes a structure in which pads may be arranged and coupled on one part, or fixes the pads in various ways, such as being engraved in the shape of the pad.

The support sheet height adjustment part 1440, the support sheet fixing part 1450, and the support sheet support part 1460 are positioned on the upper surface of the jig frame 1410 so that the support sheet 1470 may be arranged between the jig plates 1130 and the jig plates 1130 and adjust the height of the support sheet.

As illustrated in FIG. 14B, the support sheet 1470 is arranged so that the battery cell 1400 may be arranged between the jig plates 1130. Since the battery cell 1400 may not be arranged in the air, the support sheet 1470 is fixed to each jig plate 1130 by the support sheet fixing part 1450 and the support sheet support part 1460. In addition, there may be cases where the battery cell is pressurized and leakage occurs in the battery cell. In this case, when there is no support sheet 1470, the leakage may fall on the equipment of the battery cell inspection device 1100 and cause various adverse effects. Since the support sheet 1470 is fixed to each jig plate 1130, the battery cell 1400 may be arranged on the support sheet 1470 between each jig plate 1130, and the above-described problem may be prevented.

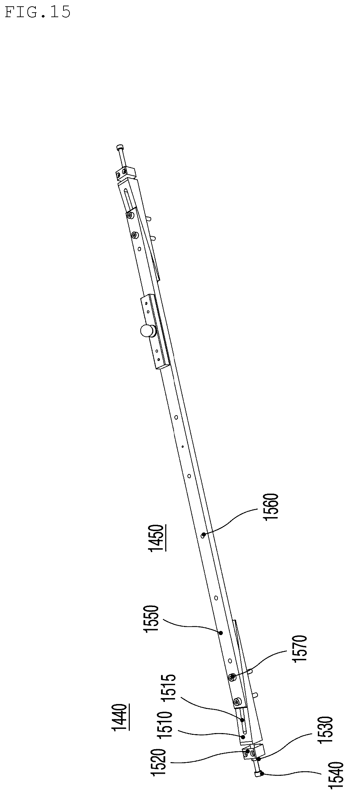

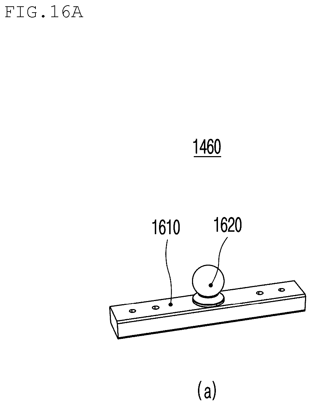

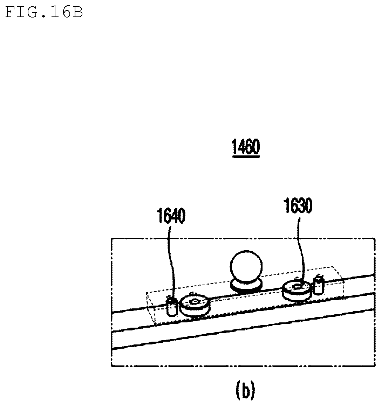

In this case, the support sheet fixing part 1450 and the support sheet support part 1460 fix the support sheet 1470, and the support sheet height adjustment part 1440 adjusts the height of the support sheet fixing part 1450 that fixes the support sheet 1470 to adjust the height of the support sheet 1470. Since the size of the battery cell may vary depending on the type, it is necessary to adjust the height of the battery cell in order for the battery cell fixing module 1140 to easily fix the battery cell. To this end, the support sheet height adjustment part 1440 adjusts the height of the support sheet 1470 by adjusting the height of the support sheet fixing part 1450. The specific configuration of each component 1440 to 1460 is illustrated in FIGS. 15 and 16.

FIG. 15 is a diagram illustrating the configuration of the support sheet height adjustment part and the fixing part according to an embodiment of the present disclosure, and FIG. 16 is a diagram illustrating the configuration of the support sheet support part according to an embodiment of the present disclosure.

In the state where the support sheet fixing part 1450 and the support sheet support part 1460 are separated, the support sheet 1470 is arranged on the support sheet fixing part 1450 (in the direction where the support sheet support part is positioned). Thereafter, the support sheet support part 1460 is coupled to the support sheet fixing part 1450 and the support sheet 1470 is fixed. Meanwhile, in the state where the support sheet 1470 is fixed by the support sheet fixing part 1450 and the support sheet support part 1460, the support sheet height adjustment part 1440 adjusts the height of the support sheet fixing part 1450 and adjusts the height of the support sheet 1470 fixed thereto.

Referring to FIG. 15, the support sheet height adjustment part 1440 according to an embodiment of the present disclosure includes a body 1510, a fixing part 1520, a nut 1530, and a screw 1540, and a support sheet fixing part 1450 includes a frame 1550, a coupling hole 1560, and a guide member 1570.

The body 1510 includes a tapered shape on one side facing the frame 1550. Accordingly, the body 1510 moves downwardly on the frame 1550 according to the movement of the nut 1530, thereby pushing up the frame 1550, or moves away from the frame 1550, thereby lowering the frame 1550.

The body 1510 includes a through hole (not illustrated) or a groove (not illustrated) at an end far from the support sheet fixing part 1450 in the longitudinal direction of the body 1510, so the screw 1540 may be introduced thereinto.

The body 1510 includes a guide hole 1515 on one surface facing the support sheet fixing part 1450 so that the guide member 1570 in the support sheet fixing part 1450 may be positioned in the guide hole 1515. As the guide member 1570 is positioned in the guide hole 1515, the body 1510 may move straightly toward the lower portion of the frame 1550 as it moves toward the frame 1550.

The fixing part 1520 fixes the screw 1540 and the body 1510 connected to the screw 1540 to the jig frame 1410. The fixing part 1520 prevents the screw 1540 and the body 1510 connected to the screw 1540 from being separated. The fixing part 1520 includes a through hole inside and is arranged so that the screw 1540 passes inside. Accordingly, the detachment of the screw 1540 and the body 1510 connected thereto is prevented, but the rotation of the screw 1540 is not affected.

The nut 1530 rotates along the screw 1540 and moves the body 1510. The nut 1530 rotates along the screw 1540 and moves the body 1510 to move closer to or away from the frame 1550.

The frame 1550 arranges the coupling hole 1560 and the guide member 1570 in an appropriate position and moves up or down by the body 1510. The frame 1550 also includes a tapered shape on the surface facing the body 1510. Accordingly, the body 1510 may be smoothly introduced into the lower portion of the frame 1550 without any separate resistance to raise the frame 1550, or move away from the frame 1550 to lower the frame 1550.The coupling hole 1560 allows the fastening means 1640 of the support sheet support part to be fastened. The fastening means 1640 is fastened to the coupling hole 1560, and the support sheet support part 1460 is fastened to the support sheet fixing part 1450. The coupling holes 1560 are formed at preset gaps on the frame 1550, so that the fastening means 1640 of the support sheet support part may be fastened to an appropriate position depending on the size of the support sheet.The guide member 1570 is positioned on the frame 1550 and protrudes toward the body 1510 of the support sheet height adjustment part 1440 so that a portion thereof is positioned within the guide hole 1515. Since the guide member 1570 is positioned in the guide hole 1515, the support sheet height adjustment part 1440 may move straight on the axis of the guide hole 1515 when moving closer to or away from the support sheet fixing part 1450.

Referring to FIG. 16, the support sheet support part 1460 includes a cover part 1610, a protrusion 1620, a support means 1630, and a fastening means 1640. FIG. 16A is a diagram when the cover part 1610 is present in the support sheet support part 1460, and FIG. 16B is a diagram when the cover part 1610 is removed in the support sheet support part 1460.

The cover part 1610 enables each component in the support sheet support part 1460 to be formed or positioned.

A protrusion 1620 is formed in a direction away from the support sheet fixing part 1450 from the cover part 1610. When a manager or a separate device separates the support sheet support part 1460 from the support sheet fixing part 1450, an external force for separation is more easily applied to the cover part 1610.

The support means 1630 is coupled to the frame 1550 of the support sheet fixing part 1450 to fix the support sheet 1470. For example, the support means 1630 is implemented with a magnetic material (e.g., a magnet), and the frame 1550 is implemented with metal, so that the support sheet 1470 may be easily supported between the support sheet fixing part 1450 and the support sheet support part 1460.

The support sheet support part 1460 may further include the fastening means 1640. The fastening means 1640 is coupled to the coupling hole 1560 of the support sheet fixing part 1450 and more firmly fixes the support sheet 1470. When it is determined that it is difficult to fix the support sheet 1470 on which the battery cells are arranged with only the support means 1630, the fastening means 1640 may be additionally included. Since the fastening means 1640 is physically fastened to the coupling hole 1560, it has a greater fastening force than the supporting means 1630. Accordingly, the fastening means 1640 is fastened to the coupling hole 1560 and may more reliably support the supporting sheet 1470.

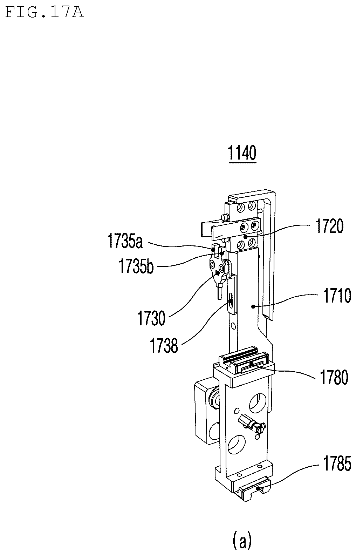

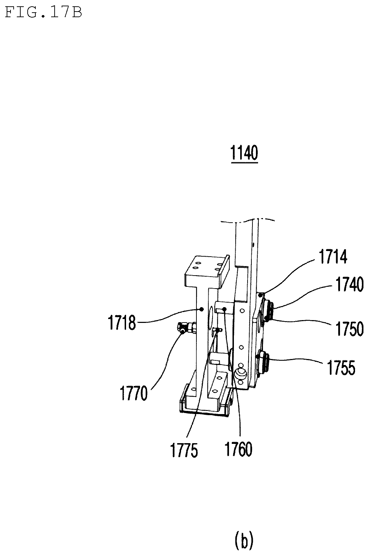

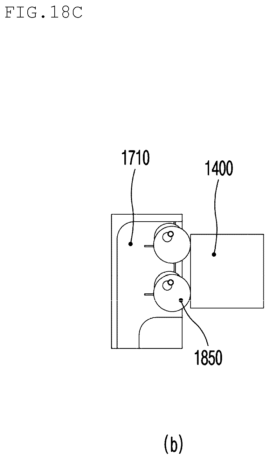

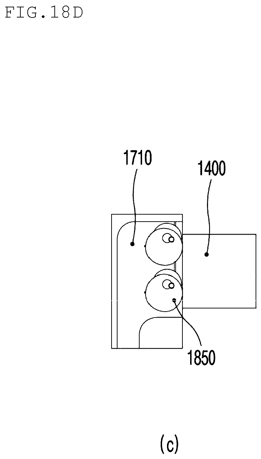

Referring back to FIG. 11, the battery cell fixing module 1140 moves on the third axis and the first axis, fixes the battery cell arranged between the jig plates 1130, and pressurizes the battery cell. The battery cell fixing modules 1140 are included in two pieces and are arranged facing each other to fix the battery cell, particularly the electrode in the battery cell, at both sides. The specific configuration of the battery cell fixing module 1140 is illustrated in FIGS. 17 and 18.

FIG. 17 is a diagram illustrating a configuration of a battery cell fixing module according to an embodiment of the present disclosure, and FIG. 18 is a diagram illustrating a configuration of an electrode connection unit in a battery cell fixing module according to an embodiment of the present disclosure.

Referring to FIG. 17, the battery cell fixing module 1140 according to an embodiment of the present disclosure includes first to third frames 1710 to 1718, an electrode connection unit 1720, a battery cell detection sensor 1730, a stopper 1740, a bush 1750, a fixing ring 1755, a shaft 1760, an actuator 1770, a lead 1775, and guide parts 1780 and 1785.

The first frame 1710 provides a space in which the electrode connection unit 1720 and the battery cell detection sensor 1730 are arranged, and is connected to the second frame 1714.

The electrode connection unit 1720 is electrically connected to an electrode of a battery cell. When the battery cell fixing module 1140 moves closer to the battery cell, particularly, the electrode of the battery cell, the electrode connection unit 1720 is electrically connected to the battery cell. The electrode connection unit 1720 is electrically connected to the electrode of the battery cell, and enables the determination of whether the battery cell has any electrical characteristics when pressurized.

Meanwhile, the electrode connection unit 1720 structurally allows the battery cell to smoothly move toward itself, but minimizes detachment in other directions. The specific structure of the electrode connection unit 1720 is described below with reference to FIG. 18.

The battery cell detection sensor 1730 senses whether the battery cell is moving closer to the electrode connection unit 1720. The battery cell detection sensor 1730 may have a protrusion 1735 protruding from the bottom of the electrode connection unit 1720 toward the electrode connection unit 1720. The protrusion 1735 is implemented with two, and is implemented with the gap so that the battery cell may be positioned between them when it is electrically connected to the electrode connection unit 1720. One protrusion 1735a transmits light, and the other protrusion 1735b receives light, thereby detecting whether the battery cell has entered the electrode connection unit 1720.

The battery cell detection sensor 1730 includes a guide part 1738 and is connected to the first frame 1710. The first frame 1710 includes a rail (not illustrated) on a surface facing the battery cell detection sensor 1730, and the guide part 1738 moves up and down along the rail (not illustrated). Accordingly, the battery cell detection sensor 1730 may move closer to or away from the electrode connection unit 1720. Accordingly, depending on the position at which the electrode of the battery cell moves closer to the electrode connection unit 1720, the battery cell detection sensor 1730 may prevent the collision with the electrode of the battery cell.

The second frame 1714 is connected to the first frame 1710, and allows the first frame 1710 to move on the third axis along with the movement of the battery cell. The second frame 1714 is implemented in a form that surrounds the first frame 1710. The first frame 1710 and the second frame 1714 include a plurality of through holes (not illustrated) through which the shaft 1760 may pass, thereby allowing the plurality of shafts 1760 to pass through. The shaft 1760 passes through and the bush 1750 and the fixing ring 1755 are coupled thereto. Accordingly, the first frame 1710 may only move along the shaft 1760 by the second frame 1714, and may be fixed and not moved except for the above-described movement.

The stopper 1740 is arranged at the end of the shaft 1760 (away from the third frame) to prevent the bush 1750 and the fixing ring 1755 from being detached.

The bush 1750 contacts the shaft 1760 inside and the through holes (not illustrated) of the respective frames 1710 and 1714 outside, and moves the respective frames 1710 and 1714 along the shaft 1760. When the bush 1750 is in a state where it may move according to the position of the lead 1775, the bush 1750 moves along the shaft 1760. Mainly, the bush 1750 moves away from the stopper 1740, and moves the respective frames 1710 and 1714 together.

The fixing ring 1755 is arranged on each outer surface (the surface not facing the first frame) of the second frame 1714, particularly, around the through holes (not illustrated), to prevent the second frame 1714 from being detached from the bush 1750. The fixing ring 1755 is arranged around the through hole (not illustrated) in each outer surface of the second frame 1714 to prevent the bushing 1750 from being detached in the direction in which the second frame 1714 moves closer to or away from the stopper 1740.

The shaft 1760 allows the bushing 1750 to move along itself. The shaft 1760 is arranged on the third axis so that when the battery cell moves along the third axis and an external force is applied to the first frame 1710, the first frame 1710 and the second frame 1714 connected thereto also move on the shaft 1760.

The actuator 1770 and the lead 1775 control the movement of the second frame 1714 along the shaft 1760 by the bushing 1750.The actuator 1770 is positioned to penetrate through the third frame 1718 within the third frame 1718, and moves the lead 1775 on the third axis. The lead 1775 may be moved away from the second frame 1714 or closer to the second frame 1714 by the actuator 1770. When the lead 1775 moves closer to the second frame 1714, the lead 1775 moves toward the stopper 1740. When the lead 1775 moves closer to and contacts the second frame 1714, the second frame 1714 is prevented from moving away from the stopper 1740 by the lead 1775. In particular, when the lead 1775 comes into contact with the second frame 1714 in a situation where the second frame 1714 is positioned closest to the stopper 1740, the second frame 1714 is prevented from moving by the lead 1775. Conversely, when the lead 1775 moves away from the stopper 1740 and away from the second frame 1714, the second frame 1714 may move toward the lead 1775 to the position of the lead 1775. Accordingly, the second frame 1714 and the first frame 1710 may move on the third axis. In this way, the actuator 1770 and the lead 1775 adjust whether or not the second frame 1714 moves on the third axis and adjust the movement position.

The third frame 1718 is positioned to face the first frame 1710 and the second frame 1714 at a preset distance from the first frame 1710 and the second frame 1714. The third frame 1718 includes a through hole (not illustrated) or a groove (not illustrated) having a cross-sectional area the same size as the cross-sectional area of the shaft 1760, so a portion of the shaft 1760 may be introduced into the through hole (not illustrated) or the groove (not illustrated). The shaft 1760 is introduced into the through hole (not illustrated) or the groove (not illustrated), and the third frame 1718 and the first frame 1710/second frame 1714 are physically connected by the shaft 1760. Accordingly, as the third frame 1718 moves, the first frame 1710 and the second frame 1714 also move along therewith.

The third frame 1718 supports the actuator 1770 and each guide part 1780 and 1785 and provides a space where they may be arranged.

The first guide part 1780 is arranged at an end of the third frame 1718 facing the jig plate 1130 and is connected to the rail 1418 of the jig plate 1130. Accordingly, the first guide part 1780 moves on the rail 1418. As the first guide part 1780 moves along the rail 1418, the third frame 1718 and the first and second frames 1710 and 1714 connected thereto may all move along the rail 1418. By the first guide part 1780, all frames within the battery cell fixing module 1140 may move along the first rail 1150 and move closer to or away from the battery cell 1400.

The second guide part 1785 is arranged at the far end from the jig plate 1130 of the third frame 1718 and is connected to the first rail 1150 on the frame 1160. Accordingly, the second guide part 1785 moves on the first rail 1150. As the second guide part 1785 moves along the first rail 1150, all frames within the battery cell fixing module 1140 move along the rail 1418, and the respective battery cell fixing modules 1140 may move closer to or away from each other.

Referring back to FIG. 11, the first rail 1150 is arranged on the frame 1160 along the third axis so that the respective battery cell fixing modules may move in a direction closer to or away from each other.

The second rail 1155 is arranged on the first axis at the bottom of the frame 1160, so each frame 1160 may move in a direction (the first axis) closer to or away from each other. The second rail 1155 is arranged on the first axis at the bottom of the frame 1160, and the frame 1160 includes a guide part (not illustrated) at the bottom and is connected to the second rail 1155. Accordingly, the frame 1160 may move on the second rail 1155 along the first axis and move closer to or away from each other between the frames 1160.

The frame 1160 supports each battery cell fixing module 1140 and the first rail 1150 and provides a space for them to be arranged. The frames 1160 may move closer to or away from each other along the second rail 1155, and the battery cell fixing modules 1140 may move closer to or away from each other along the first rail 1150.

The first fixed plate 1164 fixes the pressurizing part 1110 so that the pressurizing part 1110 may be coupled to the jig press plate 1120 without detachment and completely pressurize the jig press plate 1120.

The second fixed plate 1168 fixes the pressure sensor 1170 and maintains the gap between the second fixed plate 1168 and the support plate 1180 so that the pressure sensor 1170 may be arranged.

The pressure sensor 1170 senses the pressure applied to the support plate 1180. The pressure sensor 1170 senses the pressure applied to the support plate 1180 between the second fixed plate 1168 and the support plate 1180, and senses what size of pressure is applied to each battery cell. The jig press plate 1120 is pressurized by the pressurizing part 1110 to pressurize each jig plate 1130, and the jig plate 1130 and the battery cells arranged therebetween transmit the pressure to the adjacent jig plate 1130 by the pressurization and are all compressed in the direction of the support plate 1180. Finally, the pressure is transmitted to the support plate 1180 to reduce the gap between the jig plates 1130, and the pressure sensor 1170 senses the pressure.

The elastic member 1185 transmits the pressure transmitted to the pressurizing plate 1125 to the support plate 1180, and prevents the pressurizing plate 1125 from colliding with the support plate 1180 while being pressed.

The guide cylinder 1190 is arranged to penetrate through the guide hole 1414 of each jig plate 1130, and allows the jig plates 1130 to move along the axis on which the guide cylinder 1190 is arranged. Both ends of the guide cylinder 1190 are fixed to each fixed plate 1164 and 1168 and are arranged on the third axis through the guide hole 1414 of each jig plate 1130. Accordingly, when the jig plate 1130 is pressed by the jig press plate 1120, it may move along the guide cylinder 1190.

FIG. 18 is a diagram illustrating a configuration of an electrode connection unit in the battery cell fixing module according to an embodiment of the present invention.

Referring to FIG. 18A, the electrode connection unit 1720 according to the first embodiment of the present disclosure includes a cell guide 1810, a probe pin 1820, a probe pin guide 1830, and a probe pin fixing part 1840.

Two cell guides 1810 are arranged on a first frame 1710 with a gap equal to or greater than a thickness of a battery cell, particularly a battery cell electrode, so the battery cell electrode may be introduced therebetween. In particular, the cell guide 1810 includes a tapered surface 1815 on a mutually facing surface at an end far from the first frame 1710. The tapered surface 1815 is formed so that the inclined surfaces face each other, and as a result, the battery cell electrode may more easily enter between the cell guides 1810.

The probe pin 1820 is arranged at the upper and lower ends of the cell guide 1810 with the cell guide 1810 therebetween, and is electrically connected to the battery cell electrodes introduced along the cell guide 1810. The probe pin 1820 has a length that allows a pin head to protrude from the end of the probe pin guide 1830, and is arranged within the probe pin guide 1830. The probe pin 1820 is arranged at the upper and lower ends, and allows the battery cell electrodes to be stably contacted without being biased in one direction.

The probe pin fixing part 1840 is arranged within the first frame 1710 with the cell guide 1810 therebetween, and the probe pin guide 1830 is fixed within the probe pin fixing part 1840. An elastic member (not illustrated), for example, a spring, is arranged within the probe pin guide 1830 to allow the probe pin 1820 to reciprocate. When the probe pin 1820 comes into contact with the battery cell electrode, the probe pin 1820 moves to the probe pin guide 1830, but when the contact is released, the probe pin 1820 is allowed to protrude the pin head at the end of the probe pin guide 1830 again.

In this way, since the probe pin 1820 is positioned at the upper and lower ends of the cell guide 1810 with the cell guide 1810 therebetween, the battery cell electrode may enter the cell guide 1810 to a sufficient depth. When the battery cell electrode enters the cell guide 1810 sufficiently, the following advantages may occur.

When the battery cell fixing module 1140 moves closer to or away from each other, it does not move by receiving power from a separate motor, but moves by the cell guide 1810. When the battery cell electrode is introduced into the cell guide 1810, the battery cell moves according to the movement of the jig plate 1130, and the cell guide 1810 receives an external force in the direction of movement of the battery cell (the third axis) due to the movement of the battery cell. As the cell guide 1810 receives the external force, the first frame 1710 and the remaining frames connected thereto may also move together.

Here, when the battery cell electrode is not sufficiently introduced into the cell guide 1810, the battery cell movement causes the external force to be applied to the cell guide 1810 by only a portion of the battery cell electrode, which increases the risk of damage to the battery cell electrode. On the other hand, when the battery cell electrode is sufficiently introduced into the cell guide 1810, the battery cell electrode may contact the cell guide 1810 with a sufficient area and apply the external force, which may reduce the risk of damage.

Meanwhile, the electrode connection unit 1720 may have a structure as illustrated in FIGS. 18B to 18D.

Referring to FIGS. 18B to 18D, the electrode connection unit 1720 according to a second embodiment of the present disclosure includes a connection roller 1850, a rotating roller 1860, an elastic member 1870, a bearing 1880, and a stop ring 1890. Although omitted in FIGS. 18b to 18d, the cell guide 1810 is formed between the two connection rollers 1850.

The connection roller 1850 is implemented with a conductive material, rotates by the rotating roller 1860, and is electrically connected to the battery cell electrode.

The connection roller 1850 includes a coupling hole 1855 at a position off-center (eccentric). Accordingly, the coupling projection 1865 of the rotating roller 1860 and the coupling member (not illustrated) are coupled by the coupling hole 1855, and when the two rollers 1850 and 1860 are coupled, the connecting roller 1850 rotates due to the rotation of the rotating roller 1860. In this case, since the connecting roller 1850 includes the coupling hole 1855 at a position deviating from the center, when there is no separate external force, a portion of the connecting roller 1850 protrudes outside the first frame 1710 (FIG. 18C). Meanwhile, when the battery cell electrode enters along the cell guide 1810, the connecting roller 1850 comes into contact with (electrically connects to) the battery cell electrode and rotates around the position of the coupling hole 1855 (FIG. 18D).

This may bring about the following effects. For example, in the case of the conventional pogo pin that is arranged in a guide and reciprocates within the guide, if the battery cell electrode enters and makes contact with the pogo pin in the axial direction in which the pogo pin reciprocates, no problem occurs. However, when the pogo pin has an angle with the axial direction of the reciprocating movement and the battery cell electrode enters and makes contact with the pogo pin, friction occurs between the pogo pin and the guide, causing wear of the pogo pin and the guide. When the pogo pin is worn, changes occur in the electrical characteristics, which may adversely affect the measurement of the electrical characteristics of the battery cell in contact with the pogo pin. On the other hand, since the connection roller 1850 rotates based on the coupling hole 1855, in addition to the wear that inevitably occurs due to the contact, additional wear that occurs due to the direction of contact with the battery cell electrode may be prevented.The rotating roller 1860 rotates the connecting roller 1850 when the connecting roller 1850 receives the external force (due to contact with the battery cell electrode). The rotating roller 1860 includes a connecting projection 1865 at the center and is connected to the connecting hole 1855 of the connecting roller 1850 together with a connecting member (not illustrated). Accordingly, when the connecting roller 1850 receives the external force, the rotating roller 1860 rotates, and rotates the connecting roller 1850 together.

The rotating roller 1860 is also implemented with a conductive material and is electrically connected to the battery cell electrode via the connecting roller 1850. Meanwhile, a wire (not illustrated) that electrically connects the rotating roller 1860 and the control unit (not illustrated) may be formed on the rotating roller 1860. The connecting roller 1850 comes into contact with the battery cell electrodes a relatively large number of times, and thus has a relatively short lifespan compared to the rotating roller 1860. Accordingly, in a situation where the connecting roller 1850 needs to be replaced, when a wire (not illustrated) is formed in the connecting roller 1850, inconvenience may occur as not only the connection roller 1850 but also the wire (not illustrated) should be replaced. To prevent such inconvenience, the wire (not illustrated) is formed in the rotating roller 1860 so that only the connecting roller 1850 may be smoothly replaced.The elastic member 1870 is connected to the first frame 1710 at one end and to a point of the rotating roller 1860 at the other end, thereby restoring the rotating roller 1860, or more specifically, a point of the rotating roller, to the initial position. The elastic member 1870 is connected to the point of the rotating roller 1860 that protrudes a portion of the first frame 1710 in the absence of the separate external force. When the connecting roller 1850 comes into contact with the battery cell electrode and the connecting roller 1850 and the rotating roller 1860 rotate, the elastic member 1870 rotates together with the first frame 1710 because it is connected to one end thereof. Afterwards, when the contact between the connecting roller 1850 and the battery cell electrode is released, the elastic member 1870 is again restored and restores the rotating roller 1860. Depending on the restoration of the rotating roller 1860, the connecting roller 1850 may also be restored to its initial position.The bearing 1880 is implemented at a position corresponding to the rotation axis of the rotating roller 1860 in the first frame 1710, is coupled to the rotating roller 1860, and rotates the rotating roller 1860 in place.The stop ring 1890 is arranged on the outer side of the bearing 1880 within the first frame 1710 to prevent the bearing 1880 from being detached from the first frame 1710.Meanwhile, the connecting roller 1850 is illustrated in the form of the roller in FIG. 18C, but is not necessarily limited thereto. The connecting roller 1850 may be implemented in any shape as long as it includes a coupling hole 1855, and a part of the first frame 1710 protrudes to the outside of the first frame 1710 to maintain contact when the battery cell electrode first enters into contact. For example, the connecting roller 1850 may be implemented in a fan shape.

The spirit of the present embodiments has been mere illustratively described hereinabove, and those skilled in the art to which the present embodiments pertain may make various modifications and alterations without departing from the essential characteristics of the present embodiments. Accordingly, the present embodiments are to describe the spirit of the present embodiments rather than to limit the spirit of the present embodiments. The scope of the present embodiments is not limited to these embodiments. The scope of the present embodiments should be interpreted by the following claims, and it should be interpreted that all the spirits equivalent to the following claims fall within the scope of the present embodiments.

### CROSS-REFERENCE TO RELATED APPLICATION

This application claims priority under U.S.C. §119(a) (35 U.S.C § 119(a)) to Korean Patent Application Nos. 10-2022-0090311, 10-2022-0090320, 10-2022-0090327, and 10-2022-0090338, filed on July 21, 2022, in the Korean Intellectual Property Office, the disclosure of which is incorporated herein by reference in its entirety. In addition, if this patent application claims priority for the same reason as above for countries other than the United States, all the contents are incorporated into this patent application as references.

In the above description, the technical idea of the present disclosure has been described along with the accompanying drawings, but this is an exemplary description of a preferred embodiment of the present disclosure and does not limit the present disclosure. In addition, it is clear that anyone skilled in the art of the present disclosure can make various modifications and imitations without departing from the scope of the technical idea of the present disclosure.

## Claims

1. A battery cell gripper gripping a battery cell, comprising:
a link frame that supports a configuration within the battery cell gripper;
grip parts that are formed at one end of a grip body at a preset area and move away from or closer to each other to grip the battery cell;
a hinge axis that allows the grip body to rotate around itself;
an actuator;
a panel that moves up and down by the actuator to adjust a gap between the grip parts and includes at least two guide grooves; and
a grip projection that protrudes at the other end of the grip body or is connected in a protruding form and moves along the guide groove.

2. The battery cell gripper of claim 1, wherein the guide groove is formed at each end of the panel in a direction perpendicular to a moving direction of the panel.

3. The battery cell gripper of claim 2, wherein the guide grooves are formed in a diagonal shape in which ends of each of the guide grooves move closer to each other.

4. The battery cell gripper of claim 1, wherein the grip projection includes a fixed axis and a rotating roller arranged outside the fixed axis.

5. The battery cell gripper of claim 4, wherein the rotating roller is in contact with one surface of the guide groove and moves the guide groove according to the raising and lowering of the panel.

6. The battery cell gripper of claim 1, wherein the guide groove is formed in the panel in the same direction as a moving direction of the panel.

7. A battery cell transfer device, comprising:
the plurality of battery cell grippers of claim 1;
a pair of link members that is arranged to be crossed; a first link member connecting part that has a hinge structure and fixes the link member and the battery cell gripper to rotate the link member; and
a second link member connecting part that has the hinge structure and is coupled to each of the pair of link members to rotate the link member.
